(19) Europäisches Patentamt / European Patent Office / Office européen des brevets

(11) **EP 4 088 230 B1**

(12) **EUROPEAN PATENT SPECIFICATION**

(45) Date of publication and mention
of the grant of the patent:
**08.07.2026  Bulletin 2026/28**

(21) Application number: **21705659.7**

(22) Date of filing: **05.01.2021**

(51) International Patent Classification (IPC):
***G06N 10/60*** *(2022.01)*

(52) Cooperative Patent Classification (CPC):
**G06N 10/60**

(86) International application number:
**PCT/US2021/012209**

(87) International publication number:
**WO 2021/141918 (15.07.2021 Gazette 2021/28)**

(54) **SYSTEM AND METHOD FOR QUANTUM SAMPLING FROM A PROBABILITY DISTRIBUTION**

SYSTEM UND VERFAHREN ZUR QUANTENABTASTUNG AUS EINER
WAHRSCHEINLICHKEITSVERTEILUNG

SYSTÈME ET PROCÉDÉ D'ÉCHANTILLONNAGE QUANTIQUE À PARTIR D'UNE DISTRIBUTION
DE PROBABILITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **06.01.2020   US 202062957400 P**

(43) Date of publication of application:
**16.11.2022   Bulletin 2022/46**

(73) Proprietor: **President and Fellows of Harvard
College
Cambridge, MA 02138 (US)**

(72) Inventors:
• **WILD, Dominik S.
Somerville, MA 02143 (US)**
• **SELS, Dries
Allston, MA 02134 (US)**
• **PICHLER, Hannes
Concord, MA 02136 (US)**
• **LUKIN, Mikhail D.
Cambridge, MA 02138 (US)**

(74) Representative: **Peterreins Schley
Patent- und Rechtsanwälte PartG mbB
Hermann-Sack-Straße 3
80331 München (DE)**

(56) References cited:
• **GIACOMO TORLAI ET AL: "Integrating Neural
Networks with a Quantum Simulator for State
Reconstruction", ARXIV.ORG, CORNELL
UNIVERSITY LIBRARY, 201 OLIN LIBRARY
CORNELL UNIVERSITY ITHACA, NY 14853, 17
April 2019 (2019-04-17), XP081492748**

**Description**

**CROSS-REFERENCE TO RELATED APPLICATIONS**

This application claims the benefit of U.S. Provisional Application No. 62/957,400, filed January 6, 2020.

**STATEMENT REGARDING FEDERALLY SPONSORED RESEARCH OR DEVELOPMENT**

This invention was made with government support under N00014-15-1-2846 awarded by the Department of Defense/Office of Naval Research; and 1125846 and 1506284 awarded by the National Science Foundation. The government has certain rights in the invention.

**BACKGROUND**

Efficient algorithms that sample from probability distributions are of broad practical importance in areas including statistical physics, optimization, and machine learning. Quantum systems are naturally suited for encoding sample problems: according to the Born rule, a projective measurement of a quantum state $|\psi\rangle$ in an orthonormal basis $\{|s\rangle\}$ yields a random sample drawn from the probability distribution $p(s) = |\langle s|\psi\rangle|^2$. This observation underpins recent work aiming to demonstrate quantum advantage over classical computers by sampling from a probability distribution defined in terms of a quantum gate sequence or an optical network. While these efforts have led to impressive experimental demonstrations, thus far they have limited implications for practically relevant problems.

Therefore, there is a continuing need for systems and methods for constructing and implementing useful quantum algorithms in quantum information science.

For example, Torlai et al. (2019) describe initialization in a ground state of an initial Hamiltonian, continuous transformation of the Hamiltonian (adiabatic sweep) through a transition region into an ordered phase, and projective measurements yielding bit-string samples.

**SUMMARY**

The invention is set out in the appended set of claims.

The systems and methods described above have many advantages, such as providing quantum speedup for sampling from a probability distribution.

**BRIEF DESCRIPTION OF THE FIGURES**

Various objectives, features, and advantages of the disclosed subject matter can be more fully appreciated with reference to the following detailed description of the disclosed subject matter when considered in connection with the following drawings, in which like reference numerals identify like elements.

**FIG. 1A** is a flowchart of a method of sampling from a probability distribution employed in example embodiments of a system described herein.

**FIG. 1B** is a schematic illustration of a diffusive random walk in the Markov chain as a function of time.

**FIG. 1C** is a schematic illustration of ballistic propagation of domain walls in the quantum system employed in example embodiments of the system described herein.

**FIG. 2A** is a schematic phase diagram representing the parent Hamiltonian corresponding to the Ising chain employed in example embodiments of the system described herein.

**FIG. 2B** is a schematic diagram representing time dependence of $J_1/h$ for a chain of $n = 100$ spins employed in example embodiments of the system described herein.

**FIG. 2C** is a plot of fidelity as a function of sweep time along the trajectories shown in **FIG. 2A** employed in example embodiments of the system described herein.

**FIG. 2D** is a plot of the time $t_a$ required to reach a fidelity exceeding 0.999 as a function of the number of spins $n$ employed in example embodiments of the system described herein.

**FIG. 3A** is a schematic diagram representing an independent set on a unit disk graph employed in example embodiments of the system described herein.

**FIG. 3B** is a schematic diagram of a physical realization of a parent Hamiltonian using Rydberg blockade employed in example embodiments of the system described herein.

**FIG. 3C** is a schematic diagram representing the parameter space and order parameter of the parent Hamiltonian for a chain of length $n = 30$ for the unit disk graph shown in **FIG. 3A** employed in example embodiments of the system described herein.

**FIG. 3D** is a plot of the adiabatic state preparation time $t_a$ as a function of $n$ for the two paths shown in **FIG. 3C** employed in example embodiments of the system described herein.

**FIG. 4A** is a schematic diagram representing sampling from a star graph employed in example embodiments of the system described herein.

**FIG. 4B** is a plot of entropy per branch $S/b$ of the Gibbs distribution as a function of inverse temperature $\beta$ employed in example embodiments of the system described herein.

**FIG. 5A** is plot of the two-dimensional parameter space corresponding to the Hamiltonian associated with the unstructured search problem employed in example embodiments of a system described herein.

**FIG. 5B** is a plot of the gap of the Hamiltonian as a function of $V_0$ employed in example embodiments of the system described herein.

**FIG. 6** is a schematic diagram representing a phase diagram of the parent Hamiltonian associated with sampling from the 1D Ising model employed in example embodiments of the system described herein.

**FIGS. 7A-7D** are plots of the infidelity $1 - \mathcal{F}$ as a function of $\varepsilon$ for the four paths shown in **FIG. 2A** for chains of different lengths from $n = 10$ to $n = 1000$ employed in example embodiments of the system described herein.

**FIG. 8** is a plot of the adiabatic path length $l$ as a function of $n$ for the four paths shown in **FIG. 2A** employed in example embodiments of the system described herein.

**FIGS. 9A-9B** are plots of the adiabatic metric $G$ as a function of the distance $\eta$ from the tricritical point when approaching from the ferromagnetic phase **(FIG. 9A),** and when approaching from the paramagnetic phase **(FIG. 9B)** as employed in example embodiments of the system described herein.

**FIG. 10A** is a plot of the gap of the parent Hamiltonian for the maximum independent set problem on a chain graph along the one-parameter family Hamiltonian $H_q(\beta)$ as a function of $\beta$ employed in example embodiments of the system described herein.

**FIG. 10B** is a plot of the gap of the parent Hamiltonian for the maximum independent set problem on a chain graph along the one-parameter family Hamiltonian $H_q(\beta)$ as a function of the number of vertices $n$ *at* $\beta = 8$ employed in example embodiments of the system described herein.

**FIG. 11A** is a plot of the adiabatic path length $l$ from 0 to $\beta$ along the path (i) shown in **FIG. 3C** employed in example embodiments of the system described herein.

**FIG. 11B** is a plot of the adiabatic path length $l$ from 0 to $\beta$ along the path (ii) shown in **FIG. 3C** employed in example embodiments of the system described herein.

**FIG. 12** is a plot of the quantity $f$ as a function of $b$ at three different values of $\beta$ employed in example embodiments of the system described herein.

**FIG. 13A** is a plot of the infidelity $1 - \mathcal{F}$ as a function of $\varepsilon$ for different values of $b$ for the adiabatic evolution along the one-parameter Hamiltonian $H_q(\beta)$ for the star graph described herein.

**FIG. 13B** is a plot of the adiabatic path length $l$ as a function of $b$ for the adiabatic evolution along the one-parameter Hamiltonian $H_q(\beta)$ for the star graph described herein.

**FIG. 14A** is a plot of the infidelity $1 - \mathcal{F}$ as a function of $\varepsilon$ for different values of $b$ for the star graph employed in example embodiments of the system described herein.

**FIG. 14B** is a plot of the adiabatic path length $l$ as a function of $b$ for the star graph employed in example embodiments of the system described herein.

**FIG. 15** is a plot of the infidelity $1 - \mathcal{F}$ as a function of b employed in example embodiments of the system described herein.

**FIG. 16** depicts a classical computing node according to embodiments of the present disclosure.

**FIG. 17** depicts a combined system comprising a classical computing node and a quantum computer according to embodiments of the present disclosure.

## DETAILED DESCRIPTION

Constructing and implementing useful quantum algorithms is one of the challenges in quantum information science. Efficient sampling from a probability distribution is an important computational problem with applications ranging from statistical physics over Monte Carlo and optimization algorithms to machine learning. A family of quantum algorithms is introduced herein that provides unbiased samples drawn from a probability distribution by preparing a quantum state that encodes the entire probability distribution. This approach is exemplified with several specific examples, including sampling from a Gibbs distribution of the one-dimensional Ising model, and sampling from a Gibbs distribution of weighted independent sets. Since approximating the size of the maximum independent set on a random graph is NP (nondeterministic polynomial) hard, the latter case encompasses computationally hard problems, which are potentially relevant for applications such as computer vision, biochemistry, and social networks. In some embodiments, this approach is shown to lead to a speedup over a classical Markov chain algorithm for several examples, including sampling from the Gibbs distribution associated with the one-dimensional Ising model and sampling from the Gibbs distribution of weighted, independent sets of two different graphs. In some embodiments, a realistic implementation of sampling from independent sets based on Rydberg atom arrays is also described herein. Without being bound by theory, this approach connects computational complexity with phase transitions, providing a physical interpretation of quantum speedup, and opens the door to exploring potentially useful sampling algorithms using near-term quantum devices.

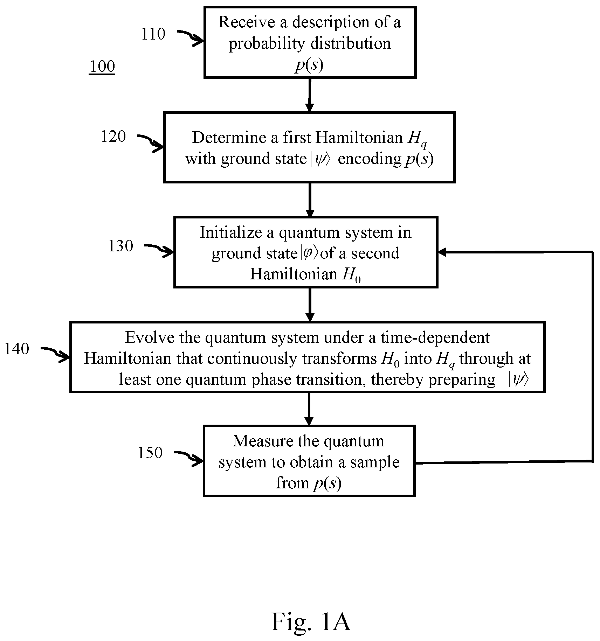

In some embodiments, the key steps for a method **100** of sampling from a probability distribution are shown in **FIG. 1A.** Receiving **110** a description of a probability distribution $p(s)$ defined on a countable, finite event space $\{s\}$, a quantum system is identified with a complete, orthonormal basis $\{|s\rangle\}$. In some embodiments, sampling from $p(s)$ can be reduced to preparing a quantum state

$$|\psi\rangle = \sum_s \sqrt{p(s)} \, |s\rangle, \qquad\qquad (1)$$

followed by a projective measurement in the $\{|s\rangle\}$ basis. The state $|\psi\rangle$ is said to encode the probability distribution p(s). The measurement projects $|\psi\rangle$ into $|s\rangle$ with probability $p(s) = |\langle s|\psi\rangle|^2$. Given the definition of this quantum state, a first Hamiltonian $H_q$ is determined 120 such that $|\psi\rangle$ is the ground state of $H_q$. The first Hamiltonian $H_q$ is referred to herein as the parent Hamiltonian of $|\psi\rangle$. Possible methods for determining a suitable parent Hamiltonian are described below. Next, a quantum system is initialized **130** in a state $|\varphi\rangle$, which is the ground state of a second Hamiltonian $H_0$. In some embodiments, the ground state of the second Hamiltonian $H_0$ can be a product state. The second Hamiltonian $H_0$ is assumed to be transformable into the first Hamiltonian $H_q$ via a continuous set of Hamiltonians, subsequently referred to herein as a continuous path. Moreover, the path is assumed to pass through at least one quantum phase transition. The state $|\psi\rangle$ is obtained by evolving **140** the quantum system under a time-dependent Hamiltonian that follows the path from $H_0$ to $H_q$. In some embodiments, the evolution can be an adiabatic evolution. The method **100** then includes performing **150** a measurement on the quantum system, thereby obtaining a sample from the probability distribution. Repeating the initializing **130,** evolving **140,** and measuring **150** yields the entire probability distribution $p(s)$.

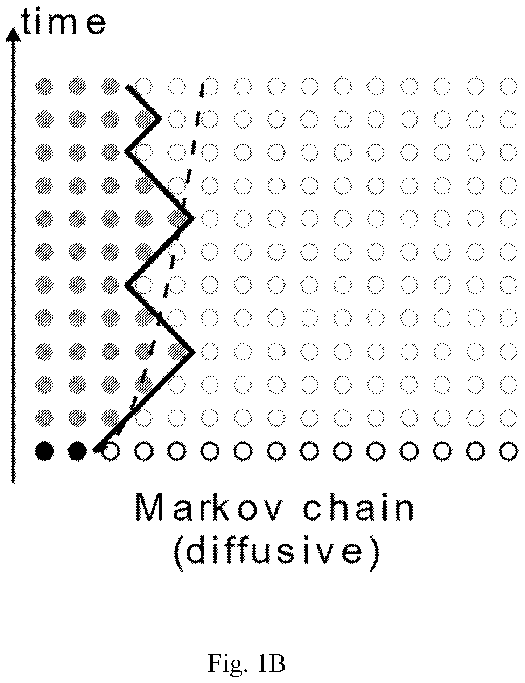

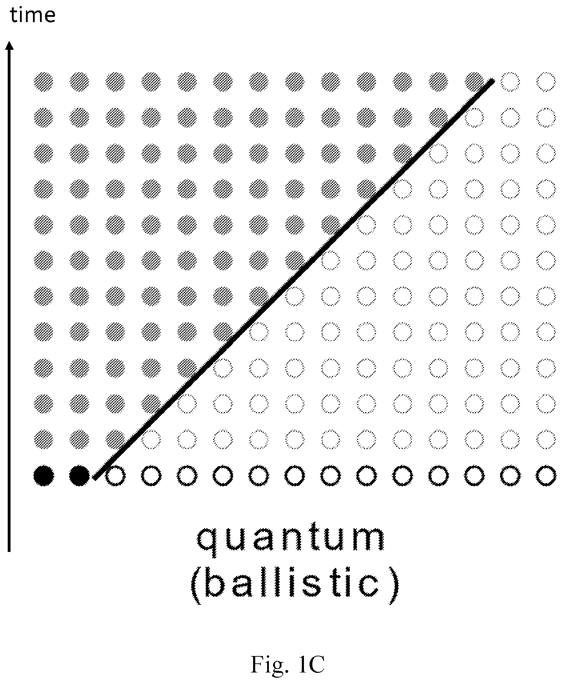

Without being bound by theory, the requirement that the path crosses a phase transition arises from the observation that this can give rise to a speedup of the quantum algorithms described herein when compared to classical algorithms based on the Markov chains detailed below. Without being bound by theory, in two of the examples presented below, the origin of the speedup can be understood as resulting from ballistic (*i.e.,* linear in time) propagation of domain walls, shown in **FIG. 1C,** enabled by quantum coherent motion at the quantum phase transition in contrast to the diffusion caused by classical thermal fluctuations, shown in **FIG. 1B.** Since the width of the region explored by diffusion is proportional to the square root of time (dashed curve in **FIG. 1B),** one generically expects a quadratic speedup. Additional speedup is possible if diffusion in the Markov chain is suppressed, e.g., by a thermal barrier. Without being bound by theory, an alternative speedup mechanism associated with quantum tunneling is uncovered in the independent set problem on star graphs, as described further below.

*Parent Hamiltonians*

In some embodiments, two distinct constructions of the parent Hamiltonian are described in what follows. A Hamiltonian of a quantum system can represent an interaction or a plurality of interactions for the quantum system. A Hamiltonian is an operator acting on the quantum system. Eigenvalues of a Hamiltonian correspond to an energy spectrum of the quantum system. The ground state of a Hamiltonian is the quantum state of the quantum system with minimal energy. The ground state of a Hamiltonian can be a quantum state at zero temperature.

The first construction of the parent Hamiltonian employed in determining the first Hamiltonian follows the prescription in Verstraete *et al.* for constructing the first Hamiltonian from the Markov chain. *See* Verstraete, F., Wolf, M. M., Perez-Garcia, D., and Cirac, J. I. Criticality, the Area Law, and the Computational Power of Projected Entangled Pair States, Phys. Rev. Lett. 96, 220601 (2006), which is hereby incorporated by reference in its entirety. One first defines a Markov chain that samples from the desired probability distribution $p(s),$ for which the ratio $p(s)/p(s')$ is known for all pairs s and s' of elements of the event space. The Markov chain can be specified (*i.e.,* described) by a generator matrix $M,$ where a probability distribution $q_t(s)$ at time $t$ is updated according to $q_{t+1}(s) = \Sigma_{s'} q_t(s')M(s', s)$. The Markov chain is assumed to satisfy the detailed balance condition $p(s) M(s, s') = p(s') M(s', s)$. In certain embodiments, the Markov chain can comprise a single-site update. In some embodiments, a Markov chain can be constructed using, for example, the Metropolis-Hastings algorithm. Then, by construction, the probability distribution $p(s)$ is a stationary distribution of the Markov chain and constitutes a left eigenvector of $M$ with an eigenvalue of unity. The detailed balance property implies that the matrix $H_q$ defined by the matrix elements

$$H_q(s, s') = n\left(I - \sqrt{\frac{p(s)}{p(s')}}\, M(s, s')\right) \quad (2)$$

is real and symmetric. Here, $n$ is the size of the quantum system in which the computation is carried out. The factor of $n$ ensures that the spectrum of the parent Hamiltonian is extensive as is required for any physical Hamiltonian. In some embodiments, $n$ can be the number of spins. The matrix $H_q$ can be viewed as a quantum Hamiltonian with the state $|\psi\rangle$ being its zero-energy eigenstate. The state $|\psi\rangle$ is a ground state because the spectrum of $H_q$ is bounded from below by 0. For every eigenvalue $n(1-\lambda)$ of $H_q$, there exists an eigenvalue $\lambda$ of $M$, where $\lambda \leq 1$ because $M$ is a stochastic matrix. Thus, $H_q$ is a valid choice of parent Hamiltonian. If the Markov chain is irreducible and aperiodic, the Perron-Frobenius theorem further guarantees that $|\psi\rangle$ is the unique ground state of $H_q$. Due to the one-to-one correspondence between the spectra of generator matrix $M$ and the parent Hamiltonian $H_q$, the spectral gap between the ground state and first excited state of $H_q$ implies a bound for the mixing time of the Markov chain described by $M$. To account for the natural parallelization during the evolution in a quantum system, the mixing time of the Markov chain is divided by $n$ for a fair comparison, denoting the result by $t_m$. The correspondence between the spectra of $M$ and $H_q$ establishes the bound $t_m \geq 1/\Delta - 1/n$, where $\Delta$ is the gap between the ground state and first excited state of the parent Hamiltonian.

The second construction of the parent Hamiltonian employed in determining the first Hamiltonian is based on a general construction described in Perez-Garcia *et al.*, which can be applied whenever the state $|\psi\rangle$ has a known representation as a projected entangled pair state (PEPS). *See* Perez-Garcia, D., Verstraete, F., Cirac, J. I., and Wolf, M. M. PEPS as unique ground states of local Hamiltonians, Quant. Inf. Comp. 8, 0650 (2008), which is hereby incorporated by reference in its entirety. In some embodiments, the probability distribution $p(s)$ can be the Gibbs distribution of a classical spin Hamiltonian with one- and two-body terms. Such a classical Hamiltonian can be written as $H_c = -\Sigma_i h_i s_i - \Sigma_{i,j} J_{ij} s_i s_j$, where $h_i$ and $J_{ij}$ are real parameters, $s_i \in \{+1, -1\}$ are classical spin variables, and each sum runs from 1 to $n$, with $n$ denoting the number of spins. The corresponding Gibbs distribution is given by $p(s) = e^{-\beta H_c(s)}/Z$, where s is a shorthand for all spin variables $\{s_1, s_2, ..., s_n\}$, $\beta$ is the inverse temperature ($\beta = 1/kT$, where $k$ is the Boltzmann constant and $T$ the temperature), and $Z = \Sigma_s e^{-\beta H_c(s)}$ is the partition function. The state $|\psi\rangle$ is correspondingly given by

$$|\psi\rangle = \frac{1}{\sqrt{Z}} \Sigma_s\, e^{-\beta H_c(s)/2} |s\rangle. \qquad (3)$$

Following the prescription in Perez-Garcia *et al.*, a PEPS representation for this state can be constructed, thereby deriving the first Hamiltonian from a PEPS representation of its ground state. Given the PEPS representation, one can straightforwardly compute the reduced density operator $\rho_i$ of a finite region $R_i$ surrounding a given site $i$. Denoting the projector onto the kernel of $\rho_i$ by $P_i$, the parent Hamiltonian can be written as $H_q = \Sigma_i P_i$. By construction, the parent Hamiltonian is positive semi-definite and $H_q|\psi\rangle = 0$, which implies that $|\psi\rangle$ is a ground state of $H_q$.

While embodiments described herein employ the above two methods of constructing the parent Hamiltonian, a person of skill in the art would understand, based on the present disclosure, that other constructions of the parent Hamiltonian can be used in the design of quantum algorithms described herein. The physical realization of the parent Hamiltonian is not restricted to the use of Rydberg states of neutral atoms described below. In general, any local parent Hamiltonian can be efficiently simulated as a quantum circuit. A person of skill in the art would understand how to implement such a circuit on a given platform, including, but not limited to, superconducting qubits, trapped ion qubits, and neutral atom qubits. A direct, physical realization of the parent Hamiltonian as the one described in this disclosure has the advantage over Hamiltonian simulation that it can be implemented with minimal overhead, rendering it suitable for currently available quantum devices. A person of skill in the art would understand that other Hamiltonians can be realized in a given physical platform, with each platform supporting a particular set of naturally realizable Hamiltonians.

*Gibbs distributions*

In some embodiments, the probability distribution can be a Gibbs distribution of a classical Hamiltonian. Every configuration s of the classical system is associated with a classical energy $H_c(s)$. The corresponding Gibbs distribution is given by $p(s) = e^{-\beta H_c(s)}/Z$, where $\beta$ is the inverse temperature ($\beta = 1/kT$, where $k$ is the Boltzmann constant and $T$ the temperature) and where the partition function $Z$ ensures correct normalization of the probability distribution. Treating the temperature as a continuous parameter naturally gives rise to a continuous set of states $|\psi(\beta)\rangle$ and a continuous set of parent Hamiltonians $H_q(\beta)$ by considering the problem of sampling from the Gibbs distribution at different temperatures. In contrast to prior work, the initial state $|\varphi\rangle$ is not required to be equal to $|\psi(\beta)\rangle$ at $\beta = 0$. Furthermore, the evolution is not restricted to the path defined by the set of Hamiltonians $H_q(\beta)$ for arbitrary $\beta$. Instead, as exemplified by the embodiments below, more general paths allow one to outperform evolution along this set of Hamiltonians and give rise to an asymptotic speedup over the classical Markov chain. In some embodiments, the path is distinct from a path along a set of first Hamiltonians associated with the Gibbs distribution at different temperatures.

The examples described below demonstrate that the method described herein of sampling from a classical probability distribution using a quantum computer can give rise to speedup over classical Markov chains. It was possible to rigorously establish this improvement as the examples were sufficiently simple to be analytically and numerically tractable. However, more challenging problems are of greater practical significance. In some embodiments, such problems include sampling from the Gibbs distribution of a spin glass with a large number of spins or sampling from independent sets on a large, disordered graph. While it may not be possible to compute the exact phase diagram for such instances, it may nevertheless be possible to establish that the initial state $|\varphi\rangle$ and the final state $|\psi\rangle$ belong to distinct quantum phases. In some embodiments, the approximate knowledge of the phase diagram could be sufficient to identify candidate paths to prepare $|\psi\rangle$. In some embodiments, the paths could be further optimized using a hybrid classical-quantum optimization loop, where a parametrized path is realized on a quantum computer and its parameters are optimized on a classical computer.

*Time evolution*

To prepare the state $|\psi\rangle$, a quantum system is prepared in the initial state $|\varphi\rangle$, which is subjected to the time-dependent Hamiltonian *H(t)*. The state evolves according to the Schrödinger equation

$$ i\frac{\mathrm{d}}{\mathrm{d}t}|\varphi(t)\rangle = H(t)|\varphi(t)\rangle, \qquad (4) $$

with the initial condition $|\varphi(0)\rangle=|\varphi\rangle$. The time-dependent Hamiltonian follows a continuous path from H(0) = $H_0$ to H($t_{\mathrm{tot}}$) = $H_q$, where $t_{\mathrm{tot}}$ is the total time of the evolution and $H_q$ is the parent Hamiltonian of $|\psi\rangle$. The continuous path is chosen such that $|\varphi(t_{\mathrm{tot}})\rangle$ has a large overlap with the desired state |). In some embodiments, the overlap can be quantified by the fidelity $\mathcal{F} = |\langle\varphi(t_{\mathrm{tot}})|\psi\rangle|^2$. For the purpose of sampling, it is not necessary that $|\varphi(t_{\mathrm{tot}})\rangle$ be exactly equal to $|\psi\rangle$, it is sufficient that the fidelity is close to one. The total variation distance d = $\|p - q\|$ between the desired probability distribution *p(s)* and the prepared distribution *q(s)* = $|\langle s|\varphi(t_{\mathrm{tot}})\rangle|^2$ is bounded by $d \leq \sqrt{1-\mathcal{F}}$. In the examples presented in this disclosure, the state preparation time will be characterized by the time $t_a$ that is required to achieve a fidelity exceeding 0.999. A person of skill in the art would understand that other fidelity thresholds can also be used.

In some embodiments, the time evolution can be adiabatic. Without being bound by theory, according to the adiabatic theorem, it is $\lim_{t_{\mathrm{tot}}\to\infty}|\varphi(t_{\mathrm{tot}})\rangle = \mathrm{e}^{i\alpha}|\psi\rangle$, with an irrelevant global phase $\alpha$, provided the gap of *H(t)* does not vanish anywhere along the path. Under this assumption, it is always possible to prepare a close approximation to $|\psi\rangle$ *(i.e.,* reach a high fidelity) by choosing $t_{\mathrm{tot}}$ sufficiently large. The required value of $t_{\mathrm{tot}}$ depends on the choice of the path *H(t)* and, in particular, the rate with which the Hamiltonian changes. In some embodiments, the rate of change can be chosen such that

$$ \sum_{n>0}\frac{1}{(E_n-E_0)^2}\left|\left\langle n(t)\left|\frac{\mathrm{d}}{\mathrm{d}t}\right|0(t)\right\rangle\right|^2 = \varepsilon^2 \qquad (5) $$

for some constant $\varepsilon$ that depends on $t_{\mathrm{tot}}$. Here, $|n(t)\rangle$ is an instantaneous eigenstate of *H(t)* with eigenenergy $E_n(t)$, that is, $H(t)|n(t)\rangle = E_n(t)|n(t)\rangle$. The states are ordered such that $E_n(t) \geq E_m(t)$ when *n > m,* such that *n* = 0 corresponds to the ground state. Without being bound by theory, this particular choice of rate of change is motivated by the goal of minimizing nonadiabatic transitions, which depend on the spectral gap [denominator on the left-hand side of Eq. (5) above] as well as the rate of change of the eigenstates [matrix element squared on the left-hand side of Eq. (5) above].

While embodiments of the present disclosure discuss adiabatic time evolution, a person of skill in the art would understand the time evolution does not need to be completely adiabatic throughout the time evolution. In some embodiments, it is advantageous for the quantum state to have nonadiabatic transitions to excited states before jumping back to the ground state along the continuous path. In the following examples of the weighted independent sets on the star graph, the time evolution of the quantum state includes nonadiabatic transitions.

*Sampling from the 1D Ising Model*

The developed quantum algorithm is now illustrated by considering a ferromagnetic Ising model composed of $n$ spins in one dimension (1D). In some embodiments, the classical Hamiltonian is given by $H_c = -\sum_{i=1}^{n} \sigma_i^z \sigma_{i+1}^z$ with periodic boundary conditions, letting $\sigma_{n+1}^z = \sigma_1^z$ and $\sigma_0^z = \sigma_n^z$. Glauber dynamics are chosen for the Markov chain, in which at each time step, a spin is selected at random and its value is drawn from a thermal distribution with all other spins fixed. Up to a constant, the corresponding parent Hamiltonian determined using Eq. (2) takes the form

$$H_q(\beta) = -\sum_{i=1}^{n}[h(\beta)\sigma_i^x + J_1(\beta)\sigma_i^z \sigma_{i+1}^z - J_2(\beta)\sigma_{i-1}^z \sigma_i^x \sigma_{i+1}^z], \qquad (6)$$

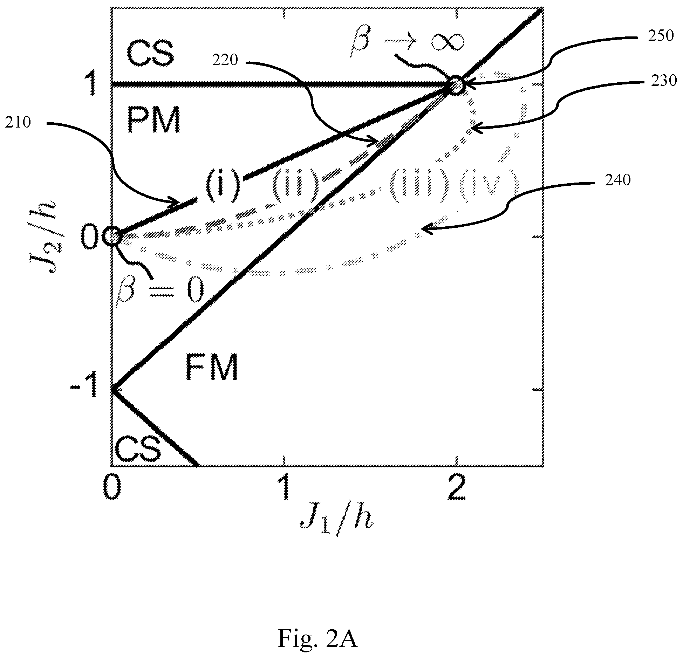

where $4h(\beta) = 1 + 1/\cosh(2\beta)$, $2J_1(\beta) = \tanh(2\beta)$, and $4J_2(\beta) = 1 - 1/\cosh(2\beta)$ (see below for details). At infinite temperature ($\beta = 0$), $J_1 = J_2 = 0$ and $h = \frac{1}{2}$, and the ground state is a paramagnet aligned along the x-direction, which corresponds to an equal superposition of all classical spin configurations. When the temperature is lowered, the parameters move along a segment of a parabola in the two-dimensional parameter space ($J_1/h$, $J_2/h$) shown by the curve (ii) **220** in **FIG. 2A.**

In some embodiments, the quantum phase diagram of the parent Hamiltonian for arbitrary values of $h$, $J_1$, and $J_2$ is obtained by performing a Jordan-Wigner transformation that maps Eq. (6) onto a free-fermion model (see below). The distinct quantum phases are displayed in **FIG. 2A.** The model reduces to the transverse field Ising model on the $J_2/h = 0$ axis, in which a phase transition from a paramagnet (PM) to a ferromagnet (FM) occurs at $J_1/h = 1$. Along the $J_1/h = 0$ axis, the ground state undergoes a symmetry-protected topological phase transition at $J_2/h = \pm 1$ from the paramagnet to a cluster-state-like (CS) phase. Note that the tricritical point **250** at ($J_1/h$, $J_2/h$) = (2, 1) describes the parent Hamiltonian corresponding to zero temperature ($\beta \to \infty$).

To prepare the state $|\psi(\beta)\rangle$ for the desired inverse temperature $\beta$, one may start from the ground state of $H_0 = H_q$ (0) before smoothly varying the parameters ($h$, $J_1$, $J_2$) to bring the Hamiltonian into its final form $H_q(\beta)$. States corresponding to finite values of $\beta$ can be connected to $|\psi(\beta)\rangle$ by a path (ii) **220** that lies fully in the paramagnetic phase. Both adiabatic state preparation and the Markov chain are efficient in this case. Indeed, it has been shown previously that there exists a general quantum algorithm with run time $\sim \log n$ for gapped parent Hamiltonians, which is identical to the Markov mixing time $t_m$ for the Ising chain.

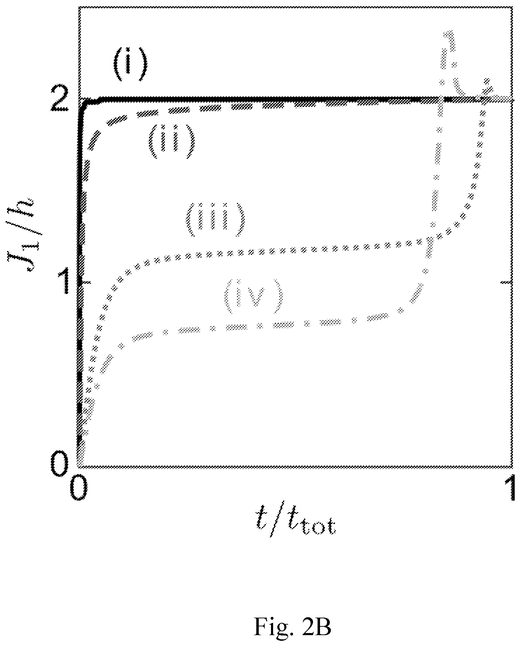

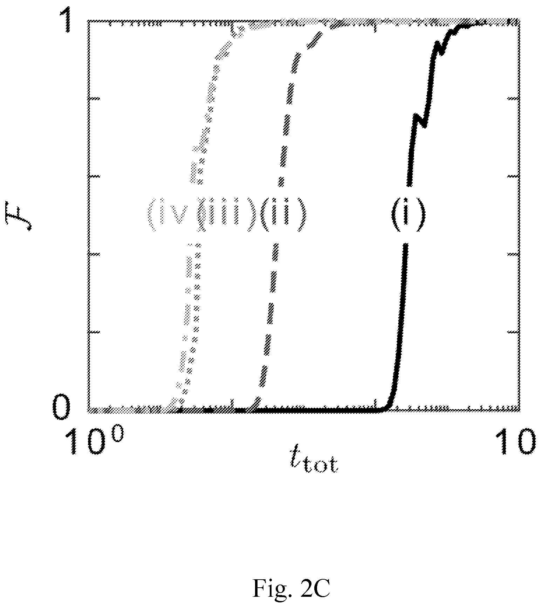

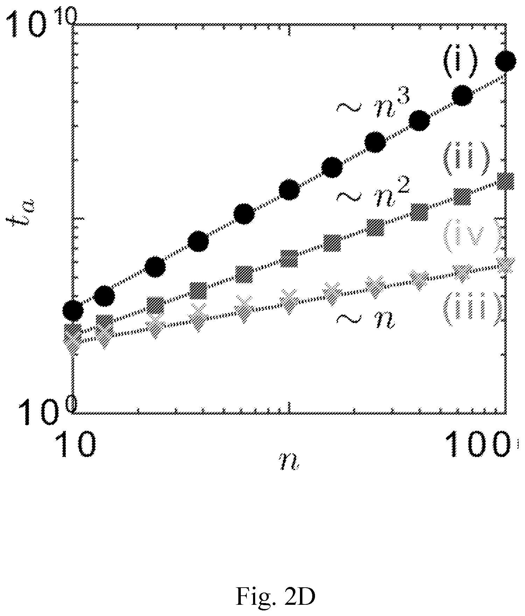

Sampling at zero temperature is more challenging, with the mixing time of the Markov chain bounded by $t_m \gtrsim n^2$ (see below). For the quantum algorithm, the four different paths **210, 220, 230,** and **240** shown in **FIG. 2A** were considered. To evaluate the dynamics quantitatively, the rate of change was chosen according to Eq. (5) above with the aim of satisfying the adiabatic condition at every point along the path (see **FIG. 2B** and Methods for the time dependence of $J_1/h$ for a chain of $n$ = 100 spins) and the Schrödinger equation was numerically integrated with the initial state $|\psi(0)\rangle$ to obtain $|\varphi(t_{tot})\rangle$ after total evolution time $t_{tot}$ (without loss of generality set $h$ = 1). **FIG. 2C** shows the resulting fidelity $\mathcal{F} = |\langle \varphi(t_{tot})|\psi(\infty)\rangle|^2$ as a function of sweep time $t_{tot}$ along paths **210, 220, 230,** and **240** for a chain of $n$ = 100 spins. To determine the dependence on the number of spins $n$, the time $t_a$ at which the fidelity exceeds 0.999 was extracted and shown in **FIG. 2D.** Three different scalings of the time $t_a$ were found: along path (i) **210**, it roughly scales as $t_a \sim n^3$, along (ii) **220** as $t_a \sim n^2$, while (iii) **230** and (iv) **240** exhibit a scaling close to $t_a \sim n$. The lines shown in **FIG. 2D** are guides to the eye, showing the respective linear, quadratic, and cubic dependence of $t_a$ on $n$.

Without being bound by theory, these scalings follow from the nature of the phase transitions. The dynamical critical exponent at the tricritical point **250** is z = 2, meaning that the gap closes with system size as $\Delta \sim 1/n^2$, which is consistent with the time required along path (ii) **220.** As show below, the dynamical critical exponent at all phase transitions away from the tricritical point **250** is z = 1, and the gap closes as $\Delta \sim 1/n$. Therefore, the paramagnetic to ferromagnetic phase transition can be crossed adiabatically in a time proportional to $n$, only limited by ballistic propagation of domain walls shown in **FIG. 1C,** as opposed to diffusive propagation in the Markov chain shown in **FIG. 1B.** There is no quadratic slowdown as paths (iii) **230** and (iv) **240** approach the tricritical point **250,** which is attributed to the large overlap of the final state with ground states in the ferromagnetic phase. Path (i) **210** performs worse than path (ii) **220** because the gap between the paramagnetic and cluster-state-like phases vanishes exactly for certain parameters even in a finite-sized system (see below). To further support the statement that the speedup is of quantum mechanical origin, note that the half-chain entanglement entropy of the ground state diverges logarithmically with the number of spins when paths (iii) **230** and (iv) **240** cross from the paramagnetic into the ferromagnetic phase. Hence, it is impossible to find a representation for the ground state at the phase transition in the form of Eq. (3) with a local, classical Hamiltonian $H_c$, because any such representation would be a matrix product state with constant bond dimension and bounded entanglement entropy. In some embodiments, this example shows that a quantum speedup is obtained by judiciously selecting a path through a quantum phase transition.

While this example illustrates a mechanism for quantum speedup, sampling from the Gibbs distribution of large Ising chains is hard only at zero temperature. Since sampling at zero temperature is equivalent to optimization, there may exist more suitable algorithms to solve the problem. The approach described herein is, however, not limited to such special cases, as illustrated below by a Gibbs distribution for which the Markov chain mixes slowly even at finite temperature. In addition, note that while the parent Hamiltonian, Eq. (2) above, does not have a simple physical realization, it is the sum of local terms and can thus be efficiently realized on a quantum computer by means of Hamiltonian simulation. However, for near term applications on small quantum devices, it is desirable to identify problems for which the parent Hamiltonian has a natural implementation. Such an example is provided below in the context of sampling from a weighted independent set problem of unit disk graphs.

## Weighted Independent Sets

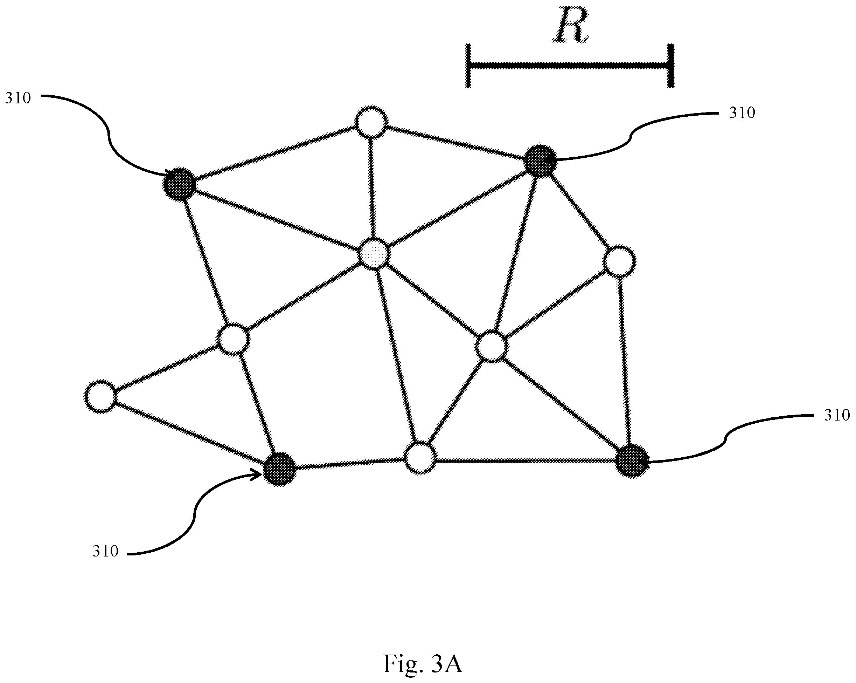

An independent set of a graph is any subset of vertices in which no two vertices share an edge. An example of an independent set (black vertices 310) is shown in FIG. 3A. One says that vertex $i$ is occupied if it is in the independent set and assigned the occupation number $n_i = 1$. All other vertices are unoccupied with $n_i = 0$. In the weighted independent set problem, each vertex is further assigned a weight $w_i$, and one seeks to minimize the energy $H_c = -\Sigma_i w_i n_i$ subject to the independent set constraint. The corresponding Gibbs distribution has been studied extensively in probability theory and computer science, as well as in statistical physics.

To construct a quantum algorithm, in some embodiments, each vertex is associated with a spin variable $\sigma_i^z = 2n_i - 1$. From Eq. (2), single spin flips with the Metropolis-Hastings update rule yield the parent Hamiltonian

$$H_q(\beta) = \sum_i P_i \big[ V_{e,i}(\beta) n_i + V_{g,i}(\beta)(1 - n_i) - \Omega_i(\beta)\sigma_i^x \big],$$

$$(7)$$

where one only considers the subspace spanned by the independent sets (see below). In Eq. (7), $P_i = \Pi_{j \in N_i}(1 - n_j)$ projects onto states in which the nearest neighbors $N_i$ of vertex $i$ are all unoccupied. The remaining parameters are given by $V_{e,i}(\beta) = e^{-\beta w_i}$, $V_{g,i}(\beta) = 1$, and $\Omega_i(\beta) = e^{-\beta w_i/2}$.

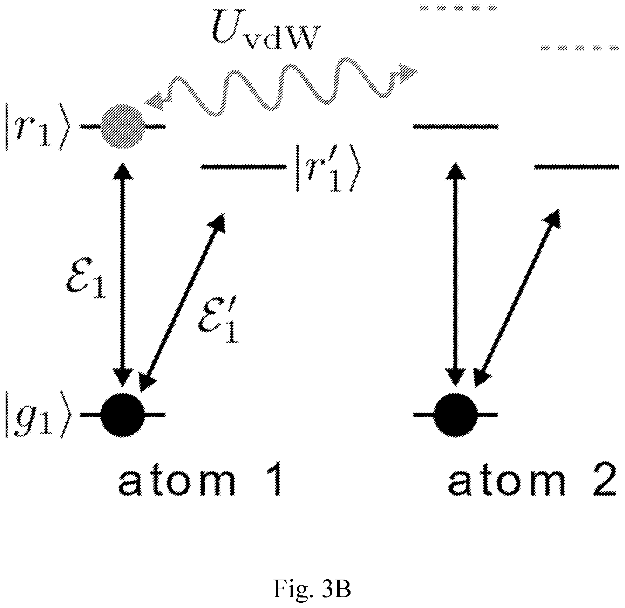

The projectors $P_i$ involve up to $d$-body terms, where $d$ is the degree of the graph. Nevertheless, in some embodiments, they can be implemented, *e.g.*, using programmable atom arrays with minimal experimental overhead for certain classes of graphs. In the case of so-called unit disk graphs, shown in **FIG. 3A,** these operators are naturally realizable in a quantum system comprising highly excited Rydberg states of a plurality of confined neutral atoms (see **FIG. 3B** and Methods below). A unit disk graph is a planar graph in which any two vertices are connected if and only if they are separated by a distance less than some unit distance $R$. As a simple example of a unit disk graph, consider a chain of length $n$ and choose equal weights $w_i = 1$. The resulting parent Hamiltonian has been studied both theoretically and experimentally using Rydberg atoms. Its quantum phases can be characterized by a staggered magnetization

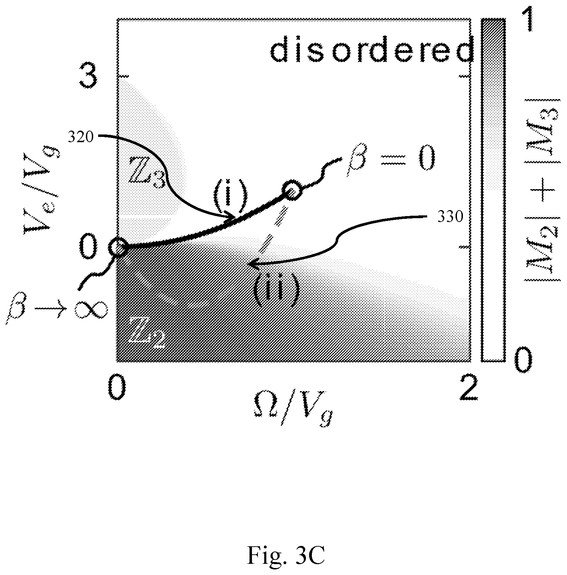

$$M_k = (1/n) \sum_{j=1}^{n} e^{2\pi i j/k} \sigma_j^z$$, $k$ being an integer. **FIG. 3C** shows the ground state expectation value of $|M_2|$ + $|M_3|$ for $n = 30$, clearly indicating the presence of three distinct phases. The order parameter $|M_2| + |M_3|$ distinguishes the disordered phase from the $\mathbb{Z}_2$ and $\mathbb{Z}_3$ ordered phases. For large $\Omega/V_g$ or large, positive $V_e/V_g$, assuming $V_g > 0$ throughout, the ground state respects the full translational symmetry of the Hamiltonian and $|M_k|$ vanishes for all integers $k$ > 1. When $V_e/V_g$ is sufficiently small, the ground state is $\mathbb{Z}_2$ ordered with every other site occupied and $|M_2| \neq 0$. Owing to next-to-nearest neighbor repulsive terms in the Hamiltonian, there further exists a $\mathbb{Z}_3$ ordered phase, in which $|M_3| \neq 0$ and the ground state is invariant only under translations by three lattice sites or multiples thereof.

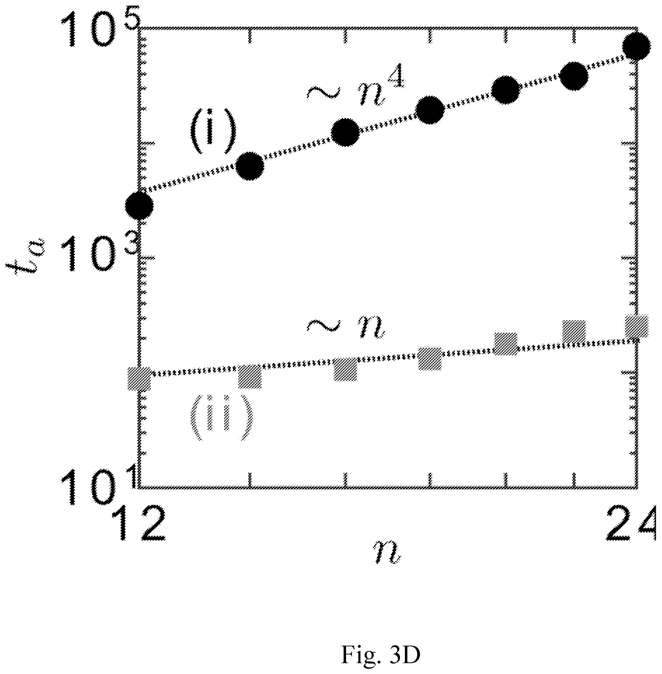

The set of Hamiltonians $H_q(\beta)$ is indicated by the curve (i) **320 in FIG. 3C.** Note that $|\psi(0)\rangle$ is not a product state. However, the Hamiltonian $H_q(0)$ can be adiabatically connected to $\Omega/V_g = 0$ and $V_e/V_g > 3$, where the ground state is a product state of all sites unoccupied. Since such a path may lie fully in the disordered phase, where the Hamiltonian is gapped, adiabatic state preparation of $|\psi(0)\rangle$ is efficient. Similarly, the Markov chain at infinite temperature is efficient, as the parent Hamiltonian is gapped. More generally, it is shown numerically below that the gap is proportional to $e^{-2\beta}$ at high temperature and $e^{-\beta}/n^2$ at low temperature. In contrast to the Ising chain, the gap vanishes as $\beta \to \infty$ even for finite sized systems. The physical reason is that defects in the $\mathbb{Z}_2$ ordering must overcome an energy barrier to propagate. Since the Markov chain is not ergodic at zero temperature, it is only possible to sample approximately from the ground state by running the Markov chain at a low but nonzero temperature $\beta \gtrsim \beta_c$, where $\beta_c = 2\log n$ corresponds to the temperature at which the correlation length is comparable to the system size. The gap of the parent Hamiltonian bounds the mixing time by $t_m \gtrsim n^2 \exp(2\beta_c) \sim n^4$. As shown in **FIG. 3D,** the time to adiabatically prepare the state $|\psi(\beta_c)\rangle$ along the path given by the set of Hamiltonians $H_q(\beta)$ roughly follows the same scaling.

A quantum speedup is obtained by choosing a different path (ii) **330,** shown in **FIG. 3C,** that goes through a quantum phase transition. For example, an approximately linear scaling $t_a \sim n$, is then observed along path (ii) **330,** as shown in **FIG. 3D.** Path (i) **320** terminates at $\beta_c = 2\log n$ while (ii) **330** ends at $\beta \to \infty$. The sweep rate was chosen according to Eq. (5), and the threshold fidelity used to compute the adiabatic state preparation time was set to $\mathcal{F} = 0.999$. The lines in **FIG. 3D** are guides to the eye, showing the scalings $t_a \sim n$ and $t_a \sim n^4$. In analogy to the Ising chain, the linear scaling is attributed to the dynamical critical exponent $z = 1$ at the phase transition between the disordered and the $\mathbb{Z}_2$ ordered phases. Note that for the independent set problem, the quantum speedup is quartic owing to the more slowly mixing Markov chain.

*Sampling from Hard Graphs*

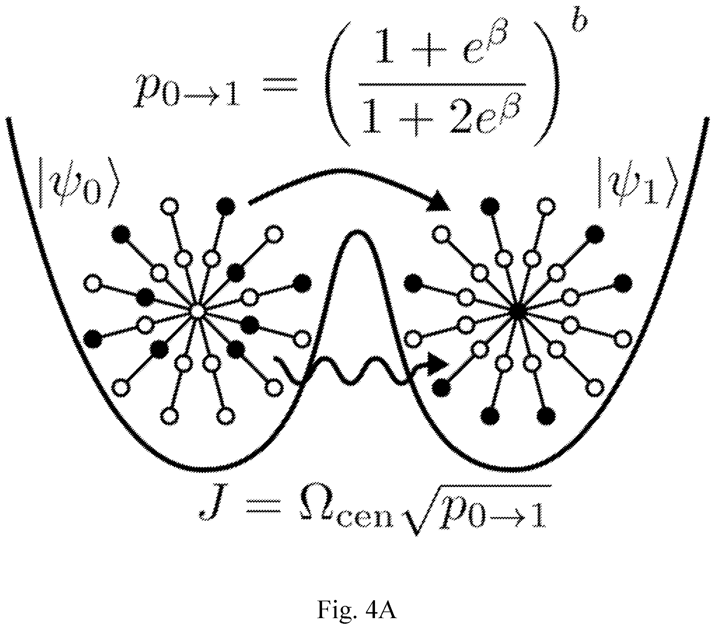

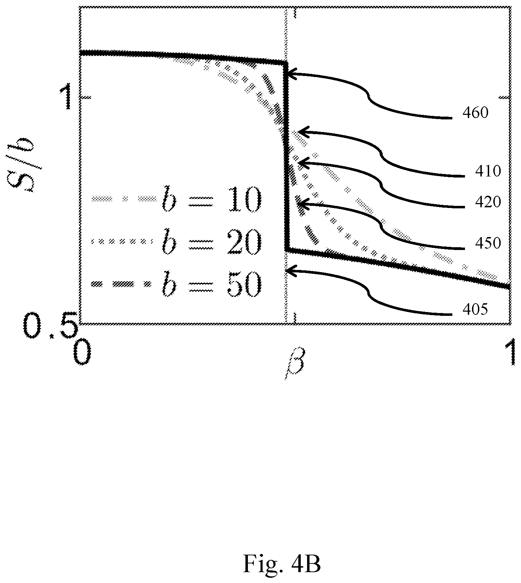

A graph is considered next as an example for which it is hard to sample from independent sets even at nonzero temperature. The graph takes the shape of a star with b branches and two vertices per branch, as shown in **FIG. 4A.** The weight of the vertex at the center is b, while all other weights are set to 1. The classical model exhibits a phase transition at $\beta_c = \log \varphi \approx 0.48$, where $\varphi$ is the golden ratio (see Methods below). Above the phase transition temperature, the free energy is dominated by the entropic contribution from the $3^b$ states with the center unoccupied. Below the transition temperature, it is more favorable to decrease the potential energy by occupying the center, at the cost of reducing the entropy, as the independent set constraint limits the number of available states to $2^b$. As shown in **FIG 4B,** the system exhibits a discontinuous phase transition **405** at $\beta_c \approx 0.48$ (dashed, vertical line). The central vertex is occupied with high probability when $\beta > \beta_c$ and unoccupied with high probability otherwise. The curves **410, 420,** and **450** were obtained for finite-sized systems with b = 10, 20, and 50 branches, respectively, while the curve **460** indicates the thermodynamic limits (see Methods below).

The Markov chain on this graph has severe kinetic constraints, because changing the central vertex from unoccupied to occupied requires all neighboring vertices to be unoccupied. Assuming that each individual branch is in thermal equilibrium, the probability of accepting such a move is given by $p_{0\to1} = [(1 + e^{\beta})/(1 + 2e^{\beta})]^b$. The reverse process is energetically suppressed with an acceptance probability of $p_{1\to0} = e^{-b\beta}$. The central vertex can thus become trapped in the thermodynamically unfavorable configuration, resulting in a mixing time that grows exponentially with b at any finite temperature. When starting from a random configuration, the Markov chain will nevertheless sample efficiently at high temperature because the probability of the central vertex being initially occupied is exponentially small. By the same argument, the Markov chain almost certainly starts in the wrong configuration in the low temperature phase and convergence to the Gibbs distribution requires a time $t_m \gtrsim 1/p_{0\to1}$.

The corresponding quantum dynamics are captured by a two-state model formed by $|\psi_0(\beta)\rangle$ and $|\psi_1(\beta)\rangle$, which encode the Gibbs distribution at inverse temperature $\beta$ with the central vertex fixed to be respectively unoccupied or occupied (see **FIG. 4A** and Methods below). The tunneling rate between these states, *i.e.,* the matrix element $\langle\psi_0|H_q|\psi_1\rangle$, is given by $J = \Omega_{cen}\sqrt{p_{0\to1}}$, where $\Omega_{cen}$ denotes the coefficient $\Omega_i$ in Eq. (7) associated with the central vertex. The time required to adiabatically cross the phase transition is bounded by $t_a \gtrsim 1/J$, with J evaluated at the phase transition. For the set of Hamiltonians $H_q(\beta)$, one has $\Omega_{cen} = \sqrt{p_{1\to0}}$. In addition, at the phase transition, $p_{0\to1} = p_{1\to0}$ such that $t_a \gtrsim 1/p_{0\to1}$, yielding the same time complexity as the lower bound on the mixing time of the Markov chain that samples at the phase transition. However, the square-root dependence of the tunneling rate on $p_{0\to1}$ immediately suggests that a quadratic speedup may be attainable by crossing the phase transition with $\Omega_{cen} = 1$. An example of such a path is provided below, along with a demonstration of the quadratic speedup obtained by numerically evaluating the adiabatic state preparation time.

*Unstructured Search Problem*

The unstructured search problem was pivotal in the development of quantum algorithms. Grover's algorithm gave an early example of a provable quantum speedup, and it remains an essential subroutine in many proposed quantum algorithms. Moreover, the unstructured search problem played a crucial role in the conception of adiabatic quantum computing. It is shown below that, when applied to the unstructured search problem, in some embodiments, the formalism described herein recovers the adiabatic quantum search algorithm (AQS), along with its quadratic speedup over any classical algorithm. While the nonlocality of the resulting parent Hamiltonian renders it challenging to implement in practice, the result underlines the power of this approach in enabling quantum speedup.

Consider the problem of identifying a single marked configuration *m (i.e., a* single solution) in a space of a total of *N* elements. In some embodiments, to connect this search problem to a sampling problem, the energy -1 is assigned to the marked configuration, while all other states have energy 0. This is summarized by the classical Hamiltonian

$$H_c = -|m\rangle\langle m|. \qquad (8)$$

Solving the search problem can now be formulated as sampling from the Gibbs distribution associated with $H_c$ at zero temperature. Given the lack of structure of the problem, a natural choice for the Markov chain is to propose any configuration with equal probability 1/N. If the update is accepted according the Metropolis-Hastings rule, the parent Hamiltonian according to Eq. (2) takes the form

$$H_q(\beta) = I - A(\beta)(|m\rangle\langle m| + |m_\perp\rangle\langle m_\perp|) - V_0(\beta)|\psi_0\rangle\langle\psi_0| -$$

$$V_m(\beta)|m\rangle\langle m|, \qquad (9)$$

where

$$A(\beta) = \frac{N-1}{N}\left(1 - e^{-\beta/2}\right) \qquad (10)$$

$$V_0(\beta) = e^{-\beta/2}, \qquad (11)$$

$$V_m(\beta) = \frac{1}{N} + \frac{N-2}{N}e^{-\beta/2} - \frac{N-1}{N}e^{-\beta}. \qquad (12)$$

The states $|\psi_0\rangle = \sum_i |i\rangle/\sqrt{N}$ and $|m_\perp\rangle = \sum_{i\neq m}|i\rangle/\sqrt{N-1}$ are equal superpositions of all states in the search space with and without the marked state $|m\rangle$. For conciseness, the factor $n = \log N$ that would render the parent Hamiltonian extensive has been omitted from Eq. (9), as it represents only a logarithmic correction to the computation time.

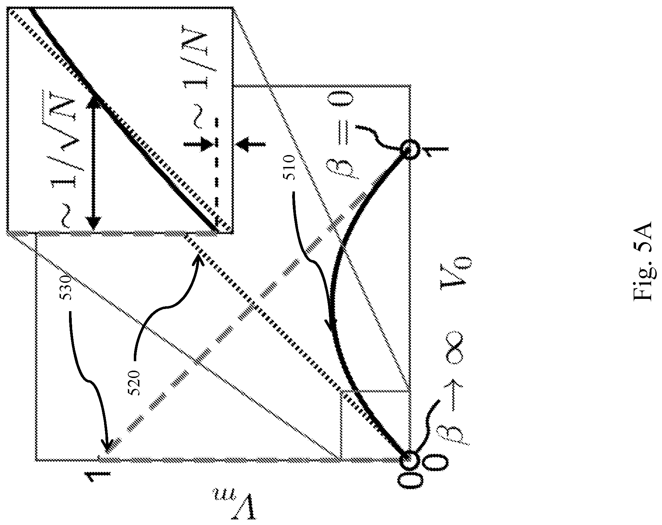

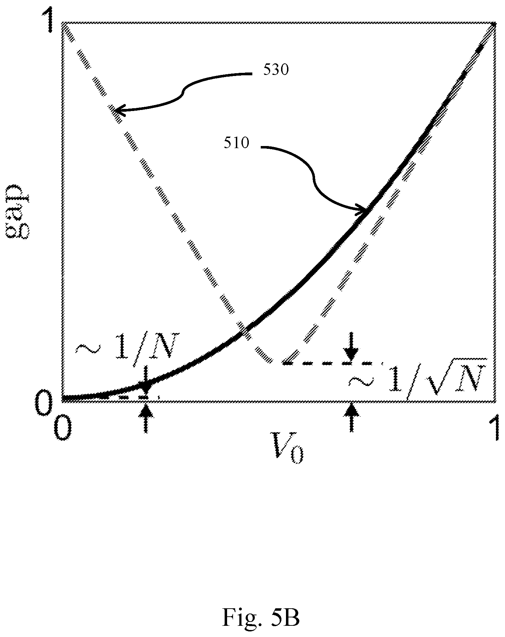

Since $|\psi_0\rangle$ is contained in the subspace spanned by $\{|m\rangle, |m_\perp\rangle\}$, the Hamiltonian acts trivially on the orthogonal subspace. In fact, all nontrivial dynamics arise from the last two terms in Eq. (9). **FIG. 5A** shows the parameter space corresponding to the Hamiltonian in Eq. (9). The curve **510** shows the set of Hamiltonians $H_q(\beta)$ with $V_0(\beta)$ and $V_q(\beta)$ given by Eq. (11) and Eq. (12). Line **530** corresponds to the adiabatic quantum search algorithm, while line **520** indicates the location of a first-order quantum phase transition. The inset shows a magnified view of a region of parameter space close to the origin. **FIG. 5B** shows the gap of the Hamiltonian in Eq. (6) along curves **510** and **530 in FIG. 5A** as a function of $V_0$. To gain insight into the performance of the Markov chain, consider the quantum phase diagram of the extended, two-dimensional parameter space, where one allows for arbitrary values of $(V_0, V_m)$. By rewriting Eq. (9) in terms of $|m\rangle$ and $|m_\perp\rangle$ only, one can show that these two states have a relative energy difference given by $V_m - (1 - 2/N)V_0$ while being connected by an off-diagonal matrix element (tunneling rate) of magnitude $\sqrt{N-1}V_0/N$. In the thermodynamic limit $N \to \infty$, the system undergoes a first-order quantum phase transition 520 when the energy difference vanishes, i.e., $V_m = V_0$. When $V_m > V_0$, the ground state has a large overlap with $|m\rangle$, whereas for $V_m < V_0$, it is close to $|m_\perp\rangle$ (or $|\psi_0\rangle$). For large $N$, in the critical region, where the ground state is an approximately equal superposition of $|m\rangle$ and $|m_\perp\rangle$, the energy difference is of a size $V_0/\sqrt{N}$ as set by the tunneling rate.

The path determined by the set of Hamiltonians $H_q(\beta)$ starts at $(V_0, V_m) = (1, 0)$ when $\beta = 0$ and ends at $(0, 1/N)$ as $\beta \to \infty$. The gap at zero temperature is equal to 1/N, which allows one to bound the mixing time by $t_m \gtrsim N$ (up to logarithmic corrections). This bound is expected, as any classical algorithm must check on average half the configurations to solve the unstructured search problem. Note that adiabatic state preparation along the path determined by $H_q(\beta)$ leads to the same time complexity. One assumes that the ground state at $\beta = 0$, given by $|\psi_0\rangle$, can be readily prepared. Adiabatic state preparation experiences a bottleneck close to the quantum phase transition, where $V_0$ and $V_m$ are on the order of $1/\sqrt{N}$ as indicated by the inset in FIG. 5A. The adiabatic state preparation time is limited by the inverse of the tunneling rate in the critical region, which is on the order of $V_0/\sqrt{N} \sim 1/N$.

The above description suggests a speedup if one chooses a path that crosses the phase transition at a point

where $V_0$ and $V_m$ do not depend on $N$. One such path **530** is shown in **FIG. 5A,** which represents the straight-line segment connecting $(V_0, V_m) = (1, 0)$ to $(0, 1)$. The endpoint $(0, 1)$ can be easily continued to $(0, 1/N)$, which corresponds to the parent Hamiltonian $H_q(\beta)$ with $\beta \to \infty$ (zero temperature). Since the Hamiltonian is purely diagonal along $V_0 = 0$ in the computational basis, there are no nonadiabatic transitions along this latter segment and the parameters can be changed suddenly. Along the former segment connecting $(0, 1)$ to $(1, 0)$, the Hamiltonian is in fact identical to the Hamiltonian of the AQS algorithm. The AQS algorithm was derived by interpolating between the projectors $|\psi_0\rangle\langle\psi_0|$ and $|m\rangle\langle m|$ such that the relevant Hamiltonian parameters are related to the dimensionless time s by $V_0 = 1 - s$ and $V_m = s$. It was shown that by carefully choosing the rate of change of $s$, it is indeed possible to prepare the final ground state with high fidelity in a time

$$t_a \sim \sqrt{N}$$ limited by the tunneling rate at the phase transition.

**Methods**

*Adiabatic sweeps*

In the above examples, the rate of change of the Hamiltonian parameters was chosen using Eq. (5) with the goal of optimally satisfying the adiabatic condition at every point along a given path. If the path is parametrized by a general set of parameters $\lambda_\mu$, Eq. (5) can be written as

$$\sum_{\mu,\nu} g_{\mu\nu} \frac{\mathrm{d}\lambda_\mu}{\mathrm{d}t} \frac{\mathrm{d}\lambda_\nu}{\mathrm{d}t} = \varepsilon^2, \tag{13}$$

where

$$g_{\mu\nu} = \sum_{n>0} \frac{1}{(E_n - E_0)^2} \left( \frac{\partial}{\partial\lambda_\mu} \langle 0| \right) |n\rangle\langle n| \left( \frac{\partial}{\partial\lambda_\nu} |0\rangle \right), \tag{14}$$

with the same notation for the energy eigenstates and the corresponding eigenenergies as in Eq. (5). Equations (13) and (14) ensure that the parameters change slowly when the gap is small, while simultaneously taking into account the matrix elements $\langle n| \frac{\partial}{\partial\lambda_\mu} |0\rangle$, which determine the coupling strength of nonadiabatic processes to a particular excited state $|n\rangle$. The total evolution time can be adjusted by varying $\varepsilon$ and is given by

$$t_{\mathrm{tot}} = \frac{1}{\varepsilon} \int \sqrt{\sum_{\mu,\nu} \mathrm{d}\lambda_\mu \mathrm{d}\lambda_\nu g_{\mu\nu}}, \tag{15}$$

where the integral runs along the path of interest.

It is shown below that for the cases studied here, a constant fidelity close to unity is reached at a small value of $\varepsilon$ that is approximately independent of the system size. Hence, the parametric dependence of the adiabatic state preparation time on the system size follows from the integral in Eq. (15). Indeed, one finds that the scalings along the various paths **210, 220, 230,** and 240 for the 1D Ising model can be analytically established from the singular properties of $g_{\mu\nu}$ at the tricritical point **250.** A similar numerical analysis is provided below for both of the independent set problems.

*Implementation with Rydberg atoms*

For unit disk graphs, the parent Hamiltonian for the weighted independent set problem, Eq. (7), can be efficiently implemented in a quantum system comprising highly excited Rydberg states of a plurality of neutral atoms that are confined by, for example, optical tweezers. As illustrated in **FIG. 3B,** the ground state $|g_i\rangle$ of an atom $i$ encodes the unoccupied state of a given vertex $i$. Similarly, the occupied state is encoded in a Rydberg state $|r_i\rangle$. The first and last term of Eq. (7) are implemented by driving a transition from $|g_i\rangle$ to $|r_i\rangle$. The value of $V_{e,i}$ is set by the detuning of the drive, whereas $\Omega_i$ is proportional to the amplitude of the drive, $\varepsilon_i$. The projectors $P_i$ arise due to Rydberg blockade, wherein each of the plurality of confined neutral atoms is configured to blockade at least one other of the plurality of confined neutral atoms when excited into a Rydberg state. If an atom is excited to the Rydberg state, the strong van der Waals interaction $U_{\mathrm{vdW}}$ shifts the Rydberg states of all neighboring atoms out of resonance, effectively turning off the drive and thereby enforcing the independent set constraint. The remaining second term in Eq. (7) can be realized using a similar approach, combining the Rydberg blockade with an AC Stark shift induced by an off-resonant drive from the ground state to an auxiliary Rydberg state $|r'_i\rangle$. The Rydberg interaction contributes additional terms to the Hamiltonian that decay as $1/r^6$ with the distance r between two atoms. These terms have been neglected throughout, noting that a strategy to mitigate their role has been proposed in a related context. *See* Pichler, H., Wang, S.-T., Zhou, L., Choi, S., and Lukin, M. D. Computational complexity of the Rydberg blockade in two dimensions, Preprint at http://arxiv.org/abs/ 1809.04954 (2018), which is hereby incorporated by reference in its entirety. In certain embodiments, initializing the quantum system can comprise exciting each of a subset of the plurality of confined neutral atoms according to the ground state of the second Hamiltonian. In some embodiments, evolving can comprise directing a time-varying beam of coherent electromagnetic radiation to each of the plurality of confined neutral atoms. In certain embodiments, performing the measurement can comprise imaging the plurality of confined neutral atoms by, for example, quantum gas microscopy.

In some embodiments, interactions between Rydberg atoms can also be used to implement more complicated parent Hamiltonians. For instance, Förster resonances between Rydberg states can give rise to simultaneous flips of two neighboring spins. In the chain graph, such updates allow defects of two adjacent, unoccupied vertices to propagate without an energy barrier. Finally, note that even though the star graph is not a unit disk graph, its parent Hamiltonian could potentially be implemented using anisotropic interactions between Rydberg states.

*Classical phase transition of the star graph*

Without being bound by theory, the temperature at which the classical model associated with the independent set problem for the star graph undergoes a phase transition can be computed exactly. The partition function is given by

$$\mathcal{Z} = \left(1 + 2e^{\beta}\right)^b + e^{b\beta}\left(1 + e^{\beta}\right)^b. \tag{16}$$

The two terms correspond to the different configurations of the central vertex. The probability that the central site is occupied is given by

$$p_1 = \frac{1}{\mathcal{Z}} e^{b\beta}\left(1 + 2e^{\beta}\right)^b = \left[1 + \left(\frac{1 + 2e^{\beta}}{e^{\beta} + e^{2\beta}}\right)^b\right]^{-1}. \tag{17}$$

In the thermodynamic limit $\beta \to \infty$, Eq. (17) becomes the step function $p_1 = \Theta(\beta - \beta_c)$, where $\beta_c = \log \varphi$ with $\varphi = \left(\sqrt{5} + 1\right)/2$ being the golden ratio. The entropy $S = (U\text{-}F)/T$ can be computed from the Helmholtz free energy $F = -\log \mathcal{Z}/\beta$ and the total energy

$$U = -\partial \log \mathcal{Z}/\partial \beta.$$

*Two-state model for the star graph*

The star graph has three types of vertices: the vertex at the center and the inner and outer vertices on each branch. Without being bound by theory, restricting the analysis to the subspace that is completely symmetric under permutations of the branches, the total occupation numbers $n_{\text{in}} = \sum_{i=1}^{b} n_{\text{in},i}$ and $n_{\text{out}} = \sum_{i=1}^{b} n_{\text{out},i}$, as well as the number of unoccupied branches $n_0$ are introduced. The symmetric subspace is spanned by the states $|n_{\text{cen}}, n_{\text{in}}, n_{\text{out}}, n_0\rangle$, where $n_{\text{cen}} \in \{0,1\}$, while the other occupation numbers are nonnegative integers satisfying $n_{\text{in}} + n_{\text{out}} + n_0 = b$. If $n_{\text{cen}} = 1$, the independent set constraint further requires $n_{\text{in}} = 0$. The state $|n_{\text{cen}}, n_{\text{in}}, n_{\text{out}}, n_0\rangle$ is an equal superposition of $b!/(n_{\text{in}}! n_{\text{out}}! n_0!)$ independent configurations.

Without being bound by theory, the permutation symmetry leads to a bosonic algebra. One defines the bosonic annihilation operators $b_{\text{in}}$, $b_{\text{out}}$, and $b_0$ respectively associated with the occupation numbers $n_{\text{in}}$, $n_{\text{out}}$, and $n_0$. The Hamiltonian can be split into blocks where the central vertex is either occupied or unoccupied, as well as an off-diagonal term coupling them. Explicitly,

$$H_q = H_q^{(0)} \otimes \left(1 - n_{\text{cen}}\right) + H_q^{(1)} \otimes n_{\text{cen}} + H_q^{(\text{od})} \otimes \sigma_{\text{cen}}^x. \tag{18}$$

It follows from Eq. (7) that in terms of the bosonic operators

$$H_q^{(0)} = V_{e,\text{in}} b_{\text{in}}^\dagger b_{\text{in}} + V_{e,\text{out}} b_{\text{out}}^\dagger b_{\text{out}} + \left(V_{g,\text{in}} + V_{g,\text{out}}\right) b_0^\dagger b_0 - \Omega_{\text{in}}\left(b_{\text{in}}^\dagger b_0 + \text{h.c.}\right) -$$

$$\Omega_{\text{out}}\left(b_{\text{out}}^\dagger b_0 + \text{h.c.}\right) + V_{g,\text{cen}} P(n_{in} = 0), \quad (19)$$

$$H_q^{(1)} = V_{e,\text{out}} b_{\text{out}}^\dagger b_{\text{out}} + V_{g,\text{out}} b_0^\dagger b_0 - \Omega_{\text{out}}\left(b_{\text{out}}^\dagger b_0 + \text{h.c.}\right) + V_{e,\text{cen}}, \quad (20)$$

$$H_q^{(\text{od})} = -\Omega_{\text{cen}} P(n_{in} = 0), \quad (21)$$

where $P(n_{\text{in}} = 0)$ projects onto states with no occupied inner vertices. The parameters are labeled in accordance to the definitions in Eq. (7) with the vertex indices i replaced by the type of vertex.

The Hamiltonian can be diagonalized approximately by treating $P(n_{\text{in}} = 0)$ perturbatively. One identifies the lowest energy modes that diagonalize the quadratic parts of $H_q^{(0)}$ and $H_q^{(1)}$ and associates with them the bosonic annihilation operators $c_0$ and $c_1$, respectively. Both modes have zero energy while the other modes are gapped for any finite value of $\beta$. One may thus expect the ground state to be well approximated in the subspace spanned by $\left|\psi_0\right\rangle = c_0^{\dagger b}\left|0\right\rangle/\sqrt{b!}$ and $\left|\psi_1\right\rangle = c_1^{\dagger b}\left|0\right\rangle/\sqrt{b!}$, where $|0\rangle$ denotes the bosonic vacuum, focusing on the situation where all parameters follow the path defined by the set of Hamiltonians $H_q(\beta)$ except for $\Omega_{\text{cen}}$ and $V_{e,\text{cen}}$, which may be adjusted freely. One can show that in this case, $|\psi_0\rangle$ and $|\psi_1\rangle$ encode the Gibbs distribution of weighted independent sets on the star graph with the central vertex held fixed.

To include the effect of the terms involving $P(n_{\text{in}} = 0)$, one performs a Schrieffer-Wolff transformation for the subspace spanned by $|\psi_0\rangle$ and $|\psi_1\rangle$, arriving at the effective Hamiltonian

$$H_{\text{eff}} = \begin{pmatrix} \varepsilon_0 + \delta\varepsilon_0 & -J - \delta J \\ -J - \delta J & V_{e,\text{cen}} + \delta\varepsilon_1 \end{pmatrix} \quad (22)$$

where the terms

$$\varepsilon_0 = \left\langle \psi_0 \right| P(n_{\text{in}} = 0) \left| \psi_0 \right\rangle = \left(\frac{1 + e^\beta}{1 + 2e^\beta}\right)^b, \quad (23)$$

$$J = \Omega_{\text{cen}} \left\langle \psi_1 \right| P(n_{\text{in}} = 0) \left| \psi_0 \right\rangle = \Omega_{\text{cen}} \left(\frac{1 + e^\beta}{1 + 2e^\beta}\right)^{b/2}, \quad (24)$$

are obtained by projecting the full Hamiltonian onto the low-energy subspace. The corrections from coupling to excited states as given by the Schrieffer-Wolff transformation up to second order are

$$\delta\varepsilon_0 = -\varepsilon_0 \sum_n \frac{1}{E_n^{(0)}} \left|\left\langle E_n^{(0)} \right| \sigma_{\text{cen}}^x \left| \psi_1 \right\rangle\right|^2, \quad (25)$$

$$\delta\varepsilon_1 = -\Omega_{\text{cen}}^2 \sum_n \frac{\left|\left\langle E_n^{(0)} \right| \sigma_{\text{cen}}^x \left| \psi_1 \right\rangle\right|^2}{E_n^{(0)} - V_{e,\text{cen}}}, \quad (26)$$

$$\delta J = -\frac{1}{2} \Omega_{\text{cen}} \sqrt{\varepsilon_0} \sum_n \left(\frac{1}{E_n^{(0)}} + \frac{1}{E_n^{(0)} - V_{e,\text{cen}}}\right) \left|\left\langle E_n^{(0)} \right| \sigma_{\text{cen}}^x \left| \psi_1 \right\rangle\right|^2. \quad (27)$$

Here, the relation $P(n_{in} = 0)|\psi_0\rangle = \sqrt{\varepsilon_0}\sigma_{cen}^x|\psi_1\rangle$ was used, which holds along the paths of interest. The sums run over all excited states $|E_n^{(0)}\rangle$ with energy $E_n^{(0)}$ of the quadratic part of $H_q^{(0)}$ (excluding $|\psi_0\rangle$). The term $V_{e,cen}$ will be neglected in the energy denominators of Eqs. (26) and (27), which is justified when $V_{e,cen}$ is small compared to $E_n^{(0)}$. The discussion remains valid even if this is not the case, because the second-order corrections from the Schrieffer-Wolff transformation can then be ignored. Combining these results, the complete effective Hamiltonian can be written as

$$H_{eff} = \begin{pmatrix} (1-f)\varepsilon_0 & -(1-f)J \\ -(1-f)J & V_{e,cen} - f\Omega_{cen}^2 \end{pmatrix}, \qquad (28)$$

where $f = \sum_n \left|\left\langle E_n^{(0)}\middle|\sigma_{cen}^x\middle|\psi_1\right\rangle\right|^2 / E_n^{(0)}$. One finds numerically that $f$ decays as the inverse power law in b such that the approximations are well justified in the thermodynamic limit (see below). For the set of parent Hamiltonians $H_q(\beta)$, it is $V_{e,cen} = \Omega_{cen}^2$. Hence, $H_{eff}$ depends on $f$ only through an overall factor $(1 - f)$, which tends to 1 in the limit of large $b$. The phase transition of the underlying classical model manifests itself as a first-order quantum phase transition from $|\psi_0\rangle$ to $|\psi_1\rangle$. The transition occurs when the two states are resonant, $\varepsilon_0 = V_{e,cen}$, which can be solved to give $\beta_c = \log\varphi$, in agreement with the above exact calculation of the phase transition temperature.

*Ising Chain*

*Parent Hamiltonian*

In some embodiments, Glauber dynamics define a Markov chain according to the following prescription: pick a spin at random and draw its new orientation from the Gibbs distribution with all other spins fixed. Starting from configuration *s*, the probability of flipping spin *i* in the Ising chain is thus given by

$$p_i = \frac{1}{2n\cosh[\beta(s_{i-1}+s_{i+1})]} e^{-\beta s_i(s_{i-1}+s_{i+1})}. \qquad (29)$$

By promoting the values of the spins $s_i$ to operators $\sigma_i^z$, one can concisely write the generator of the Markov chain as

$$M = \sum_i p_i \sigma_i^x + (I - \sum_i p_i) \qquad (30)$$

Eq. (2) above immediately gives

$$H_q = \frac{1}{2}\sum_i \frac{1}{\cosh[\beta(\sigma_{i-1}^z+\sigma_{i+1}^z)]}\left[e^{-\beta\sigma_i^z(\sigma_{i-1}^z+\sigma_{i+1}^z)} - \sigma_i^x\right] . \qquad (31)$$

Straightforward algebra finally yields

$$H_q = \frac{n}{2}\mathbb{I} - \frac{1}{4}\sum_i\left[\left(1 + \frac{1}{\cosh 2\beta}\right)\sigma_i^x + 2\tanh(2\beta)\sigma_i^z\sigma_{i+1}^z - \right.$$

$$\left.\left(1 - \frac{1}{\cosh 2\beta}\right)\sigma_{i-1}^z\sigma_i^x\sigma_{i+1}^z\right]. \tag{32}$$

The constant term ($(n/2)\,\mathbb{I}$) was omitted in Eq. (6) above.

*Free Fermion Solution*

*Ground state*

Without being bound by theory, the Hamiltonian in Eq. (6) or Eq. (32) above can be mapped onto a free-fermion model using a Jordan-Wigner transformation. One defines the fermion annihilation and creation operators $a_i$, $a_i^\dagger$ and relates them to the Pauli matrices according to

$$\sigma_i^x = 2a_i^\dagger a_i - 1, \quad \frac{1}{2}\left(\sigma_i^z + i\sigma_i^y\right) = e^{i\pi\sum_{j=1}^{i-1}a_j^\dagger a_j}a_i, \quad \frac{1}{2}\left(\sigma_i^z - \right.$$

$$\left. i\sigma_i^y\right) = e^{i\pi\sum_{j=1}^{i-1}a_j^\dagger a_j}a_i^\dagger. \tag{33}$$

Eq. (6) above becomes

$$H_q = -h\sum_{i=1}^{n}\left(2a_i^\dagger a_i - 1\right) - J_1\sum_{i=1}^{n-1}\left(a_i^\dagger - a_i\right)\left(a_{i+1}^\dagger + a_{i+1}\right) - $$

$$J_{21}\sum_{i=1}^{n-2}\left(a_i^\dagger - a_i\right)\left(a_{i+2}^\dagger + a_{i+2}\right) + e^{i\pi N}\left[J_1\left(a_n^\dagger - a_n\right)\left(a_1^\dagger + a_1\right) + \right.$$

$$\left. J_2\left(a_{n-1}^\dagger - a_{n-1}\right)\left(a_1^\dagger + a_1\right) + J_2\left(a_n^\dagger - a_n\right)\left(a_2^\dagger + a_2\right)\right], \tag{34}$$

where $N = \sum_{i=1}^{n}a_i^\dagger a_i$ is the total number of fermions. While the fermion number itself is not conserved, the parity $e^{i\pi N}$ is, allowing one to consider the even and odd subspaces independently.

One defines the momentum space operators

$$a_k = \frac{1}{\sqrt{n}}\sum_{j=1}^{n}e^{-ikj}a_j, \tag{35}$$

which satisfy fermionic commutation relations for suitably chosen k. Let

$$k = \frac{2\pi}{n}\times\begin{cases}(l + 1/2) & \text{if } N \text{ is even}\\ l & \text{if } N \text{ is odd}\end{cases} \tag{36}$$

for $l = 0, 1, ..., n\text{-}1 \pmod n$. With this definition, the inverse Fourier transformed operators have the formal property $a_{j+n} = -e^{i\pi N}a_j$, which accounts for the boundary terms in Eq. (34). The Hamiltonian simplifies to

$$H_q =$$

$$\sum_k \big(a_k^\dagger, a_{-k}\big) \begin{pmatrix} -h - J_1 \cos k - J_2 \cos 2k & -iJ_1 \sin k - iJ_2 \sin 2k \\ iJ_1 \sin k + iJ_2 \sin 2k & h + J_1 \cos k + J_2 \cos 2k \end{pmatrix} \begin{pmatrix} a_k \\ a_{-k}^\dagger \end{pmatrix}$$

$$\text{(37)}$$

While the above Hamiltonian can be diagonalized by a standard Bogoliubov transformation, it will prove more convenient for the purposes described herein to map it onto noninteracting spins. For $0 < k < \pi$, define

$$\tau_k^x = a_k^\dagger a_{-k}^\dagger + a_{-k} a_k, \tau_k^y = -i\big(a_k^\dagger a_{-k}^\dagger - a_{-k} a_k\big), \tau_k^z = a_k^\dagger a_k -$$

$$a_{-k} a_{-k}^\dagger. \quad \text{(38)}$$

It is straightforward to check that these operators satisfy the same commutation relations as Pauli matrices. In addition, operators corresponding to different value of $k$ commute such that one can view them as independent spin-1/2 systems, one for each value of $k$. The range of momenta is restricted to $0 < k < \pi$ due to the redundancy $\tau_{-k}^\alpha = -\tau_k^\alpha$. The cases $k = 0$ and $k = \pi$ require special treatment as both $\tau_k^x$ and $\tau_k^y$ vanish.

For concreteness, one can assume that the number of spins $n$ is even. The special cases $k = 0$ and $k = \pi$ are then both part of the odd parity subspace ($e^{i\pi N} = -1$). The Hamiltonian of the even parity subspace can be written as

$$H_q^{\text{even}} = 2 \sum_{0 < k < \pi} E_k \big(\cos \theta_k \tau_k^z + \sin \theta_k \tau_k^y\big), \quad \text{(39)}$$

where

$$E_k = \sqrt{(h + J_1 \cos k + J_2 \cos 2k)^2 + (J_1 \sin k + J_2 \sin 2k)^2}. \quad \text{(40)}$$

The angles $\theta_k$ are uniquely defined by

$$E_k \cos \theta_k = -h - J_1 \cos k - J_2 \cos 2k, \quad \text{(41)}$$

$$E_k \sin \theta_k = J_1 \sin k + J_2 \sin 2k. \quad \text{(42)}$$

The ground state is given by

$$|\text{GS}\rangle_{\text{even}} = \prod_{0 < k < \pi} e^{i\theta_k \tau_k^x / 2} |\text{vac}\rangle, \quad \text{(43)}$$

where $|\text{vac}\rangle$ is the vacuum with respect to the $a_k$ operators. The ground state energy is

$$E_{\text{GS}}^{\text{even}} = -2 \sum_{0 < k < \pi} E_k. \quad \text{(44)}$$

In the odd parity subspace, one has

$$H_q^{\text{odd}} = 2 \sum_{0 < k < \pi} E_k \left( \cos \theta_k \tau_k^z + \sin \theta_k \tau_k^y \right) - (h + J_1 +$$

$$J_2)\left(2 a_0^\dagger a_0 - 1\right) - (h - J_1 + J_2)\left(2 a_\pi^\dagger a_\pi - 1\right). \tag{45}$$

The construction of the ground state is analogous to the even case with the additional requirement that either the $a_0$ fermion or the $a_\pi$ fermion, whichever has the lower energy, be occupied. One can show that the resulting energy is gapped above $E_{\text{GS}}^{\text{even}}$ when $h + J_1 + J_2$ and $h - J_1 + J_2$ have the same sign. In the case of opposite signs, the even and odd sector ground states are degenerate in the thermodynamic limit, corresponding to the symmetry breaking ground states of the ferromagnetic phase.

Above, adiabatic evolution was considered starting from the ground state at $J_1 = J_2 = 0$. Following the above discussion, this state is part of the even subspace. Since the time evolution preserves parity, one can restrict the description to the even subspace, dropping all associated labels below.

*Excitation spectrum and phase diagram*

Excited states can be constructed by flipping any of the $\tau$ spins. Since any spin rotation commutes with the parity operator, singly excited states are given by

$$|k\rangle = \tau_k^x |\text{GS}\rangle, \tag{46}$$

with an energy $4E_k$ above the ground state. The phase boundaries are identified by looking for parameters for which the excitation gap vanishes, $E_k = 0$. In the thermodynamic limit, one can treat $k$ as a continuous variable to identify the minima of $E_k$. There are three distinct cases:

1. The gap vanishes at $k = 0$ when $h + J_1 + J_2 = 0$.
2. The gap vanishes at $k = \pi$ when $h - J_1 + J_2 = 0$.

3. The gap vanishes at $k = \pi - \cos^{-1} \frac{J_1}{2J_2}$ when $h - J_2 = 0$. A solution only exists for

$$|J_1| < 2|h|.$$

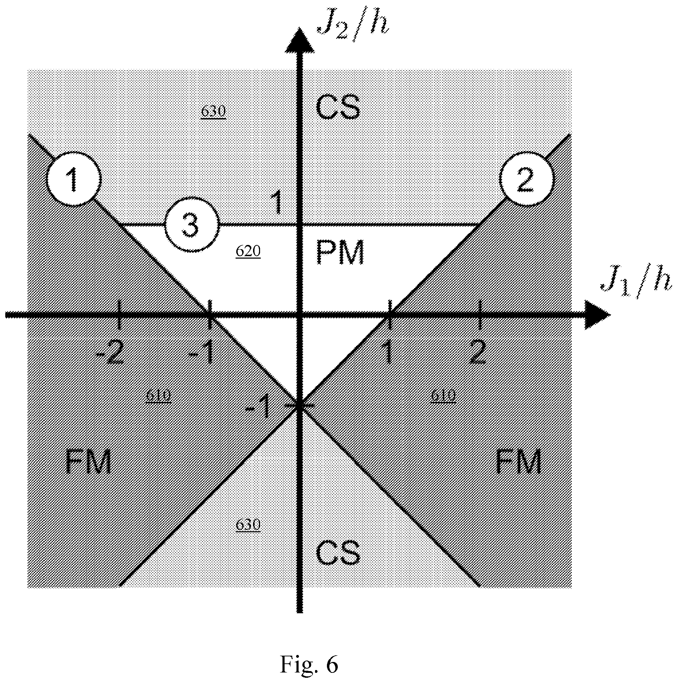

As illustrated in **FIG. 6,** cases 1 and 2 delineate the ferromagnetic phase **610** from the paramagnetic **620** and cluster-state-like phase **630** following the identification above. Case 3 separates the paramagnetic phase **620** form the cluster-state-like phase **630.**

The dispersion is linear in all three cases, except for the two special points simultaneously satisfying $h = J_2$ and $h = \pm J_1$. These are tricritical points, where the dispersion minima from case 3 and either case 1 or 2 merge into a single minimum with quadratic dispersion. Hence, the dynamical critical exponent is $z = 1$ at all phase transitions except for the tricritical points, where $z = 2$. The gap closes as $\sim n^{-z}$, as can be easily seen by considering the value of $k$ closest to the dispersion minimum for a finite-sized system. Note that in case 3, the gap displays an oscillatory behavior as a function of system size for fixed $(h, J_1, J_2)$ and may even vanish exactly. Nevertheless, the envelope follows the expected $\sim 1/n$ scaling.

*Numerical details*

To compute the fidelity after evolving under the time-dependent Hamiltonian following a given path, the Schrödinger equation was numerically integrated for each spin $\tau_k$, working in the instantaneous eigen basis $|\chi_k^\pm(t)\rangle$, which are eigenstates of $H_k = 2E_k \left( \cos \theta_k \tau_k^z + \sin \theta_k \tau_k^y \right)$ with energies $\pm 2E_k$ [see Eq. (39)]. It is convenient to parametrize each adiabatic path by a dimensionless time s running from 0 to 1. Writing the state at time s as

$$|\psi_k(s)\rangle = c_k(s)|\chi_k^-(s)\rangle + d_k(s)|\chi_k^+(s)\rangle, \qquad (47)$$

the coefficients $c_k$ and $d_k$ are determined by the Schrödinger equation

$$i\frac{\mathrm{d}}{\mathrm{d}s}\begin{pmatrix} c_k \\ d_k \end{pmatrix} = \begin{pmatrix} -2E_k(s)\frac{\mathrm{d}t}{\mathrm{d}s} & -\frac{i}{2}\frac{\mathrm{d}\theta_k}{\mathrm{d}s} \\ \frac{i}{2}\frac{\mathrm{d}\theta_k}{\mathrm{d}s} & 2E_k(s)\frac{\mathrm{d}t}{\mathrm{d}s} \end{pmatrix}\begin{pmatrix} c_k \\ d_k \end{pmatrix}, \qquad (48)$$

with the initial condition $c_k(0) = 1$, $d_k(0) = 0$. The final fidelity is obtained by solving this equation for each spin and multiplying the individual fidelities,

$$\mathcal{F} = \prod_{0<k<\pi}|c_k(1)|^2. \qquad (49)$$

Note that all terms in Eq. (48) can be evaluated without having to solve for the physical evolution time $t(s)$. The terms $E_k(s)$ and $\mathrm{d}\theta_k/\mathrm{d}s$ are readily computed from Eqs. (40)-(42), while $\mathrm{d}t/\mathrm{d}s$ follows from Eq. (13) above:

$$\frac{\mathrm{d}t}{\mathrm{d}s} = \frac{1}{\varepsilon}\sqrt{\sum_{\mu,\nu} g_{\mu\nu}(s)\frac{\mathrm{d}\lambda_\mu}{\mathrm{d}s}\frac{\mathrm{d}\lambda_\nu}{\mathrm{d}s}}. \qquad (50)$$

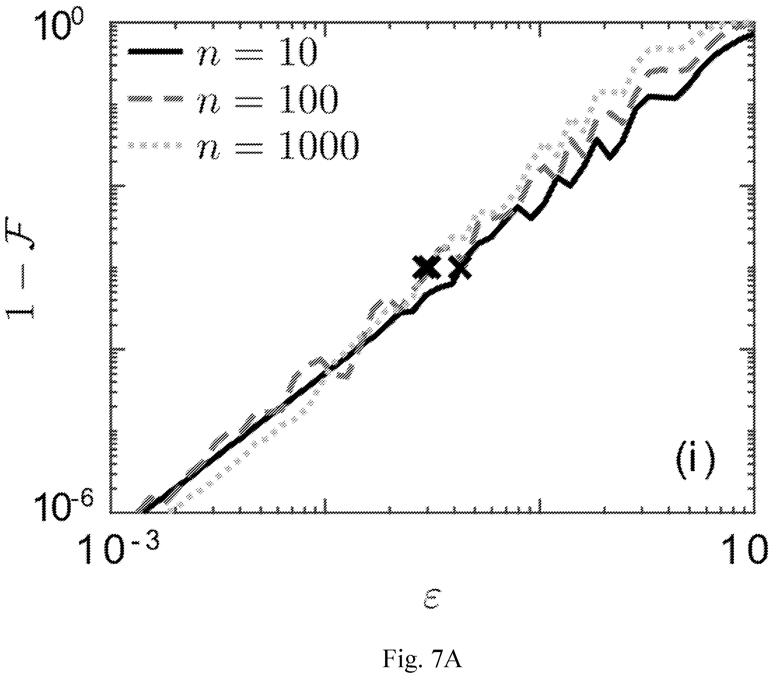

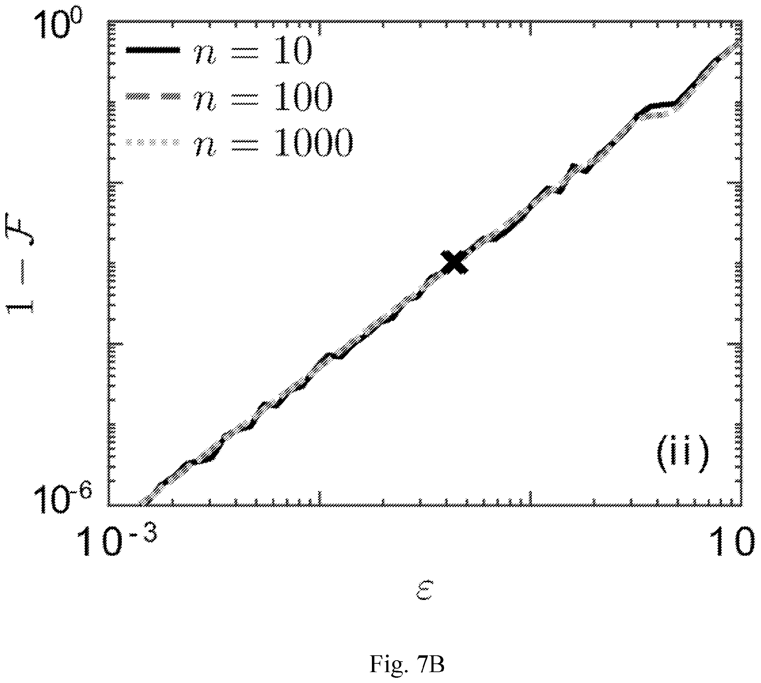

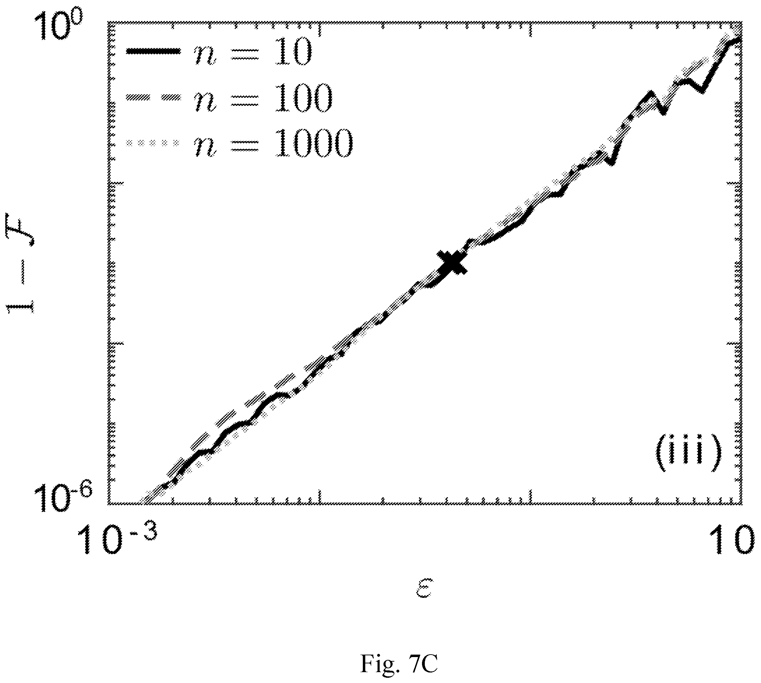

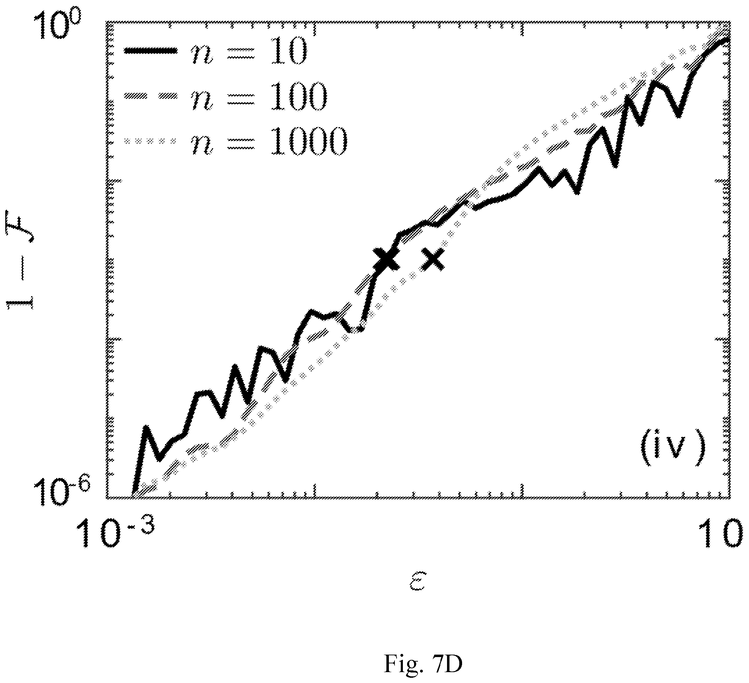

Here, $\lambda_1 = J_1$, $\lambda_2 = J_2$, setting $h = 1$ throughout. To vary the total evolution time $t_{\mathrm{tot}}$, one simply adjusts the value of $\varepsilon$. Good convergence was obtained by evolving under constant s = $s_n$ for an interval $\Delta s_n = 2 \times 10^{-3}/|\frac{\mathrm{d}\theta_k}{\mathrm{d}s}|_{s=s_n}$ before incrementing $s_{n+1} = s_n + \Delta s_n$. The number of steps is independent of the total time, yet the final fidelity is well estimated since the probability of leaving the ground state is small in each step. The resulting infidelity 1 - $\mathcal{F}$ as a function of $\varepsilon$ for the four paths described above, a parametrization of which is given in Table 1, is shown in **FIG. 7A-7D** for chains of different lengths from $n = 10$ to $n = 1000$. The black crosses indicate where the infidelity equals $10^{-3}$. One observes that the fidelity follows a universal dependence on $\varepsilon$, 1 - $\mathcal{F} \sim \varepsilon^2$. This can be understood from the fact that the first-order adiabatic correction to the wavefunction is inversely proportional to the total time. Because 1 - $\mathcal{F}$ is approximately independent of $n$ when expressed as a function of $\varepsilon$, the dependence of the total adiabatic time on the system size is largely determined by the integral in Eq. (15) above, which is analyzed in detail in the next section.

Table 1.

| Parametrization of the four paths described above. The parameter s ranges from 0 to 1. | | |
|---|---|---|
| Path | $J_1/h$ | $J_2/h$ |
| (i) | $2s$ | $s$ |
| (ii) | $2s$ | $s^2$ |
| (iii) | $3(1-s)^2s + 7.5(1-s)s^2 + 2s^3$ | $1.5(1-s)s^2 + s^3$ |
| (iv) | $6(1-s)^2s + 9(1-s)s^2 + 2s^3$ | $-3(1-s)^2s + 4.5(1-s)s^2 + s^3$ |

*Adiabatic path length*

The above numerical observations suggest that the adiabatic state preparation time is proportional to the quantity

$$l = \int \sqrt{\sum_{\mu,\nu} g_{\mu\nu}\mathrm{d}\lambda_\mu\mathrm{d}\lambda_\nu}, \qquad (51)$$

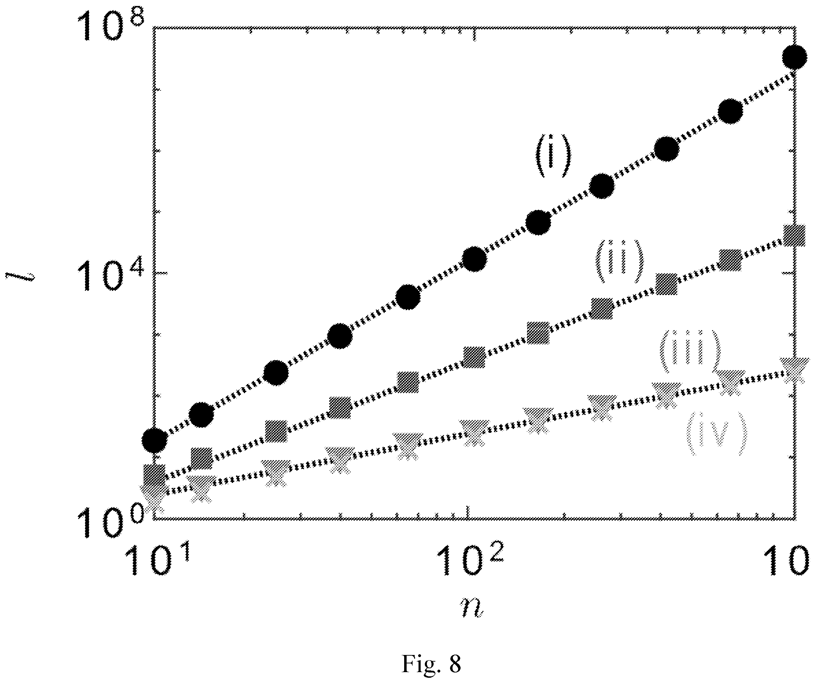

which will be referred to herein as the adiabatic path length $l$. In the same spirit, one calls $g_{\mu\nu}$ the adiabatic metric as it endows the parameter space with a distance measure relevant for adiabatic evolution. The adiabatic path length $l$ is plotted in **FIG. 8 as** a function of $n$ for the four paths discussed above **(210, 220, 230,** and **240** shown in **FIG. 2A).** The lines show the scalings $l \propto n$, $n^2$, and $n^3$. As expected, the plot looks almost identical to **FIG. 2D** above, up to an overall scale factor.

One may gain an analytic understanding of the adiabatic path length by considering the adiabatic metric close to the tricritical point. From Eqs. (43) and (46) it is straightforward to show that

$$\frac{\partial}{\partial \lambda_\mu} |GS\rangle = \frac{i}{2} \sum_{0 < k < \pi} \frac{\partial \theta_k}{\partial \lambda_\mu} |k\rangle. \tag{52}$$

It then follows immediately from the definition in Eq. (14) above that

$$g_{\mu\nu} = \sum_{0 < k < \pi} \frac{1}{64 E_k^2} \frac{\partial \theta_k}{\partial \lambda_\mu} \frac{\partial \theta_k}{\partial \lambda_\nu}. \tag{53}$$

With $\lambda_1 = J_1$, $\lambda_2 = J_2$, this result may be written in matrix form as

$$g =$$

$$\sum_{0 < k < \pi} \frac{\sin^2 k}{64 E_k^6} \begin{pmatrix} (h - J_2)^2 & (h - J_2)(2h \cos k + J_1) \\ (h - J_2)(2h \cos k + J_1) & (2h \cos k + J_1)^2 \end{pmatrix}. \tag{54}$$

In the thermodynamic limit, the momentum sum turns into an integral, which can be evaluated analytically. Setting $h = 1$ and parametrizing $J_1 = 2 + \eta \cos \alpha$, $J_2 = 1 + \eta \sin \alpha$, the result is expanded close to the tricritical point (small $\eta$) to obtain

$$G = \sum_{\mu,\nu} g_{\mu\nu} \frac{d\lambda_\mu}{d\eta} \frac{d\lambda_\nu}{d\eta} \approx \frac{3n}{2048} \times$$

$$\begin{cases} \frac{1}{32} \frac{\sin^2 \alpha}{(\cos \alpha - \sin \alpha)^{5/2}} \eta^{-5/2} + O\left(\eta^{-3/2}\right), & -\frac{3\pi}{4} < \alpha < \frac{\pi}{4} \\ \frac{1}{|\sin^3 \alpha|} \eta^{-5} + O\left(\eta^{-4}\right), & \frac{\pi}{4} < \alpha < \frac{5\pi}{4} \end{cases} \tag{55}$$

The first case corresponds to the ferromagnetic phase, while the second case applies to the paramagnetic and cluster-state-like phases. In both cases, the adiabatic metric diverges as a power law, $G \sim n\eta^{-\rho}$, with $\rho = 5/2$ in the ferromagnetic phase and $\rho = 5$ otherwise.

For finite-sized systems, one can show that exactly at the critical point, $G \sim n^\sigma$, where $\sigma = 6$ in any direction not parallel to the $J_1$ axis. Based on finite-sized scaling arguments, one expects that the metric follows the expression for the infinite system as one approaches the tricritical point until it saturates to the final value $G \sim n^\sigma$. One is thus led to define a critical region $\eta < \eta_c$ determined by $n\eta_c^{-\rho} \sim n^\sigma$, in which the metric is approximately constant. These arguments imply that the path length should scale according to

$$l \sim n^{(2 - 2\sigma + \rho\sigma)/(2\rho)} \sim \begin{cases} n, & -\frac{3\pi}{4} < \alpha < \frac{\pi}{4} \\ n^2, & \frac{\pi}{4} < \alpha < \frac{5\pi}{4} \end{cases} \tag{56}$$

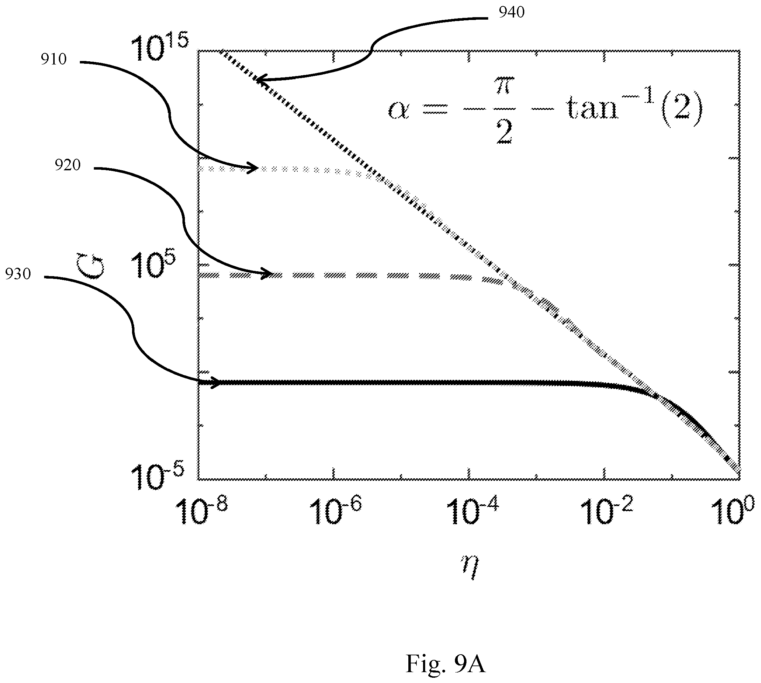

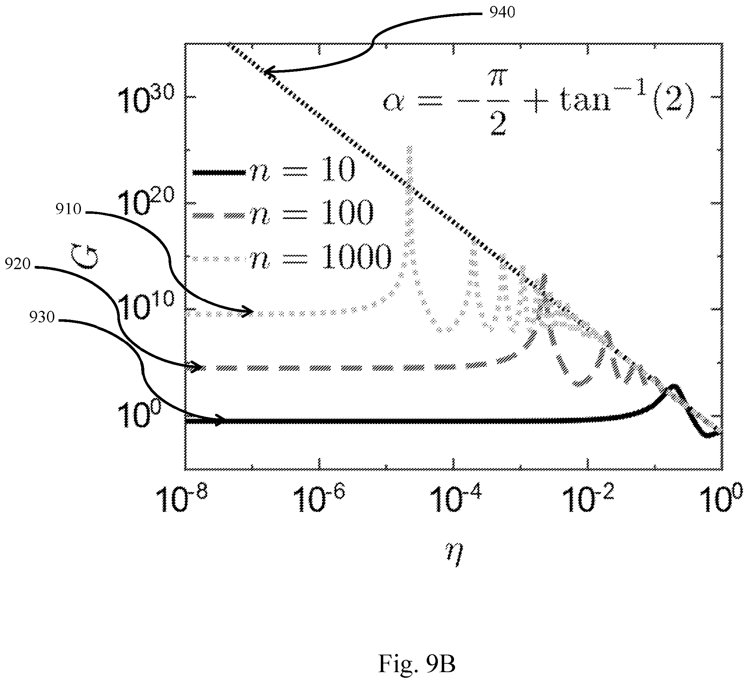

The above prediction agrees well with the numerical results for paths (ii)-(iv) shown in **FIG. 8,** however, it fails for path (i), for which a cubic scaling is observed. **FIGS**. **9A** and **9B** show G as a function of the distance from the critical point when approaching from the ferromagnetic phase **610,** and when approaching from the paramagnetic phase **620,** respectively. The lines **910, 920,** and **930** correspond to the system sizes indicated in the legend in **FIG. 9B.** The curve **940** shows the analytic result for an infinite chain. **FIG. 9B** shows that the scaling hypothesis breaks down in the latter case and oscillatory terms in G contribute significantly to the path length $l$. The oscillatory terms can be attributed to the fact that the dispersion minimum is neither at $k = 0$ nor $k = \pi$ as the tricritical point is approached from the ferromagnetic phase, thereby giving rise to an incommensurate length scale that breaks scale invariance.

A person of skill in the art would understand that a similar analysis can be performed at the transition between the paramagnetic and the ferromagnetic phases, away from the tricritical point. One finds that the adiabatic path length always scales linearly with the system size.

*Weighted Independent Set Problem*

*Parent Hamiltonian*

In some embodiments, for the weighted independent set problem, the Metropolis-Hastings update rule is used instead of Glauber dynamics. A move is accepted with probability $p_{accept} = \min(1, e^{-\beta\Delta E})$, where $\Delta E$ is the change in energy. With single site updates, the probability of changing the occupation of vertex $i$ is given by

$$p_i = P_i e^{-\beta w_i n_i}, \qquad (57)$$

assuming that the weight $w_i$ is nonnegative. The projector $P_i = \Pi_{j \in N_i}(1 - n_j)$ projects onto configurations where the nearest neighbors $N_i$ of vertex $i$ are all unoccupied to ensure that the Markov chain never leaves the independent set subspace. The possibility that the Markov chain is initialized in a state outside this subspace is not considered herein. Following the same steps as described above, one derives the parent Hamiltonian as

$$H_q = \sum_i P_i \left[ e^{-\beta w_i n_i} - e^{-\beta w_i/2} \sigma_i^x \right]. \qquad (58)$$

This can be brought into the form of Eq. (7) above using the identity $e^{-\beta w_i n_i} = (1 - n_i) + e^{-\beta w_i n_i}$.

*Chain Graph*

The parent Hamiltonian for the (unweighted) independent set problem on a chain has been previously discussed in a different context. For general parameters, the quantum phase diagram of the Hamiltonian can be estimated using numerical diagonalization of finite-sized chains. The complexity of the problem is reduced as one only needs to consider the subspace of independent sets. One further restricts oneself to states that are invariant under translation (zero momentum). Assuming that the initial state satisfies this condition, the state will remain in this subspace at all times since the Hamiltonian is translationally invariant.

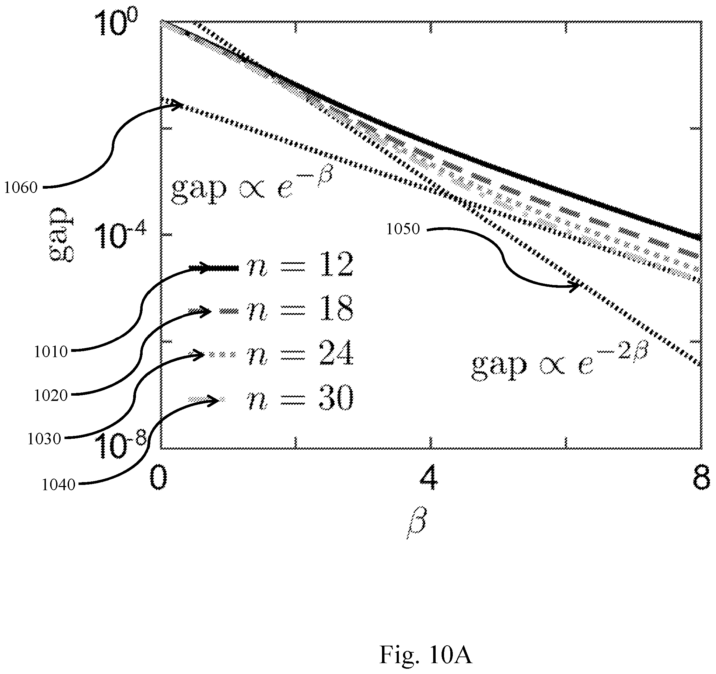

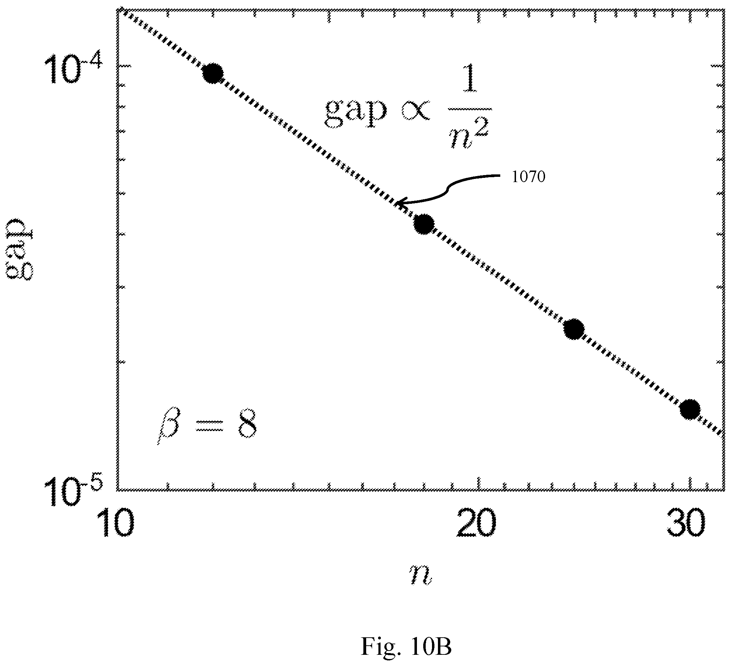

The gap of the set of Hamiltonians $H_q(\beta)$ as a function of $\beta$ is shown in **FIGS. 10A** and **10B. FIG. 10A** shows the gap for four different system sizes as a function of $\beta$. The lines **1050** and **1060** show the functions $e^{-2\beta}$ and $e^{-\beta}$, respectively, up to a constant pre-factor. **FIG. 10B** shows the dependence of the gap on the number of vertices $n$ at $\beta = 8$. The line 1070 indicates the power law $1/n^2$. At high temperature, the gap decays as $e^{-2\beta}$, in agreement with previous analytic results. At low temperature, one hence observes that the gap depends on both temperature and system size as $e^{-\beta}/n^2$. The quadratic dependence on $n$ is a consequence of the diffusive propagation of domain walls, *i.e.,* pairs of holes that break up the $\mathbb{Z}_2$ ordering. For the domain walls to propagate, it is necessary to de-excite an adjacent vertex. This results in an energy barrier, giving rise to an additional factor $e^{-\beta}$.

Due to the exponentially vanishing gap, it is not possible to adiabatically reach the state encoding the Gibbs distribution at zero temperature along path (i) **320** discussed above. One therefore only prepares the state encoding the Gibbs distribution at $\beta_c = 2 \log n$, whose fidelity relative to the state encoding the Gibbs distribution at zero temperature is approximately 90%, almost independent of $n$. The constant overlap reflects the fact that the correlation length at $\beta_c$ is a fixed ratio of the system size. It is possible to increase the overlap by adding a constant to $\beta_c$ without changing the scaling behavior discussed herein. To determine the state preparation fidelity, the Schrödinger equation is numerically integrated by exactly diagonalizing the Hamiltonian at discrete time steps $\Delta t$. The steps are chosen such that $\Delta t |d|0\rangle/dt| = 10^{-3}$, where $|0\rangle$ denotes the instantaneous ground state. The expression is most conveniently evaluated using the identity $|d|0\rangle/dt|^2 =$

$\Sigma_{n>0} |\langle n|\mathrm{d}H/\mathrm{d}t|0\rangle|^2/(E_n - E_0)^2$, where the sum runs over all excited states $|n\rangle$ with energy $E_n$. The time step is related to the change in the parameters along the path by Eq. (13) above. As for the Ising chain, the fidelity approaches 1 at small $\varepsilon$ in a fashion that is approximately independent of the number of vertices $n$. The same is true along path (ii) **330**, for which it is in fact possible to adiabatically reach the state encoding the Gibbs distribution at zero temperature in finite time. An explicit parametrization of the two paths is provided in Table 2.

Table 2.

| Parametrization of the two paths for the independent set problem described above. | | |
|---|---|---|
| The parameter $\beta$ ranges from 0 to $\infty$ and corresponds to the inverse temperature of the Gibbs distribution in the case of path (i). For path (ii), $\beta$ can only be associated with the inverse temperature of the Gibbs distribution when $\beta = 0$ or $\beta \to \infty$. | | |
| Path | $\Omega/V_g$ | $V_e/V_g$ |
| (i) | $e^{-\beta/2}$ | $e^{-\beta}$ |
| (ii) | $e^{-\beta/2}$ | $6e^{-\beta} - 5e^{-\beta/2}$ |

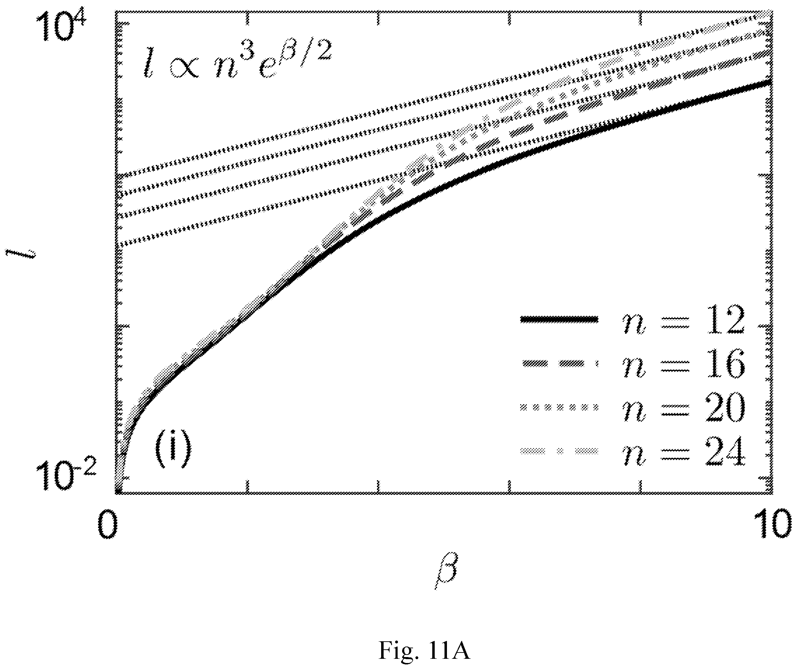

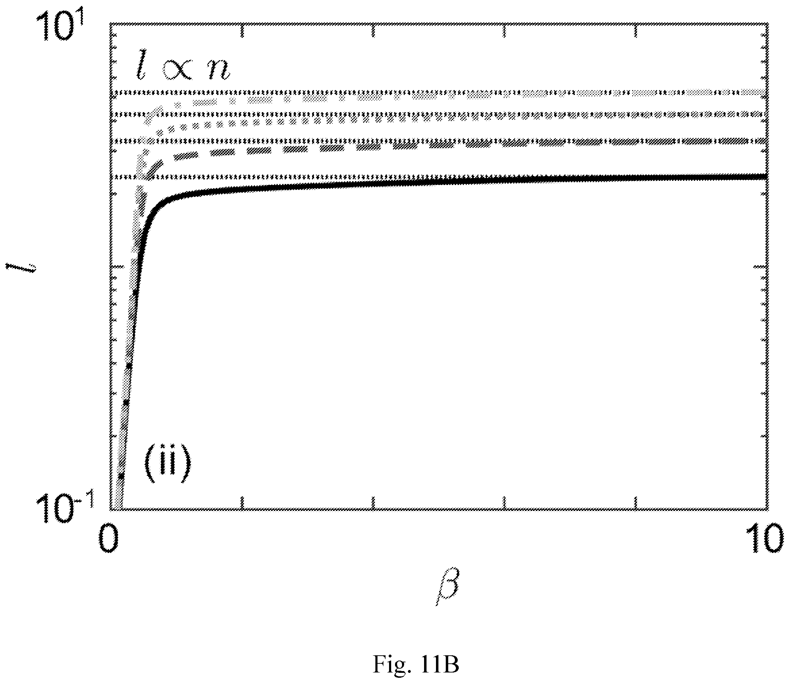

The fact that the fidelity at a fixed value of $\varepsilon$ is approximately independent of $n$ again allows one to understand the adiabatic state preparation time $t_a$ in terms of the adiabatic path length $l$ in Eq. (51). The adiabatic path length $l$ from $\beta = 0$ to $\beta = 10$ along paths (i) **320** and (ii) **330** is plotted in **FIGS. 11A** and **11B,** respectively. The dashed lines show fits to the value of $l$ at $\beta = 10$. For (i), the function $Ae^{\beta/2}n^3$ was used, while (ii) was fitted with the linear function $Bn + C$. For large $\beta$, the adiabatic path length diverges as $e^{\beta/2}n^3$ along path (i), as shown in FIG. 11A, which leads to the scaling $t_a \sim n^4$ when setting $\beta = \beta_c = 2 \log n$. By contrast, $l$ converges to a finite value as $\beta \to \infty$ along path (ii), as shown in **FIG. 11B.** The value grows linearly with $n$ such that $t_a \sim n$.

*Star Graph*

*Numerical Evaluation of f*

In the Methods section above, the quantity $f$ was defined as

$$f = \sum_n \frac{1}{E_n^{(0)}} \left| \left\langle E_n^{(0)} \middle| \sigma_{\mathrm{cen}}^x \middle| \psi_1 \right\rangle \right|^2. \tag{59}$$

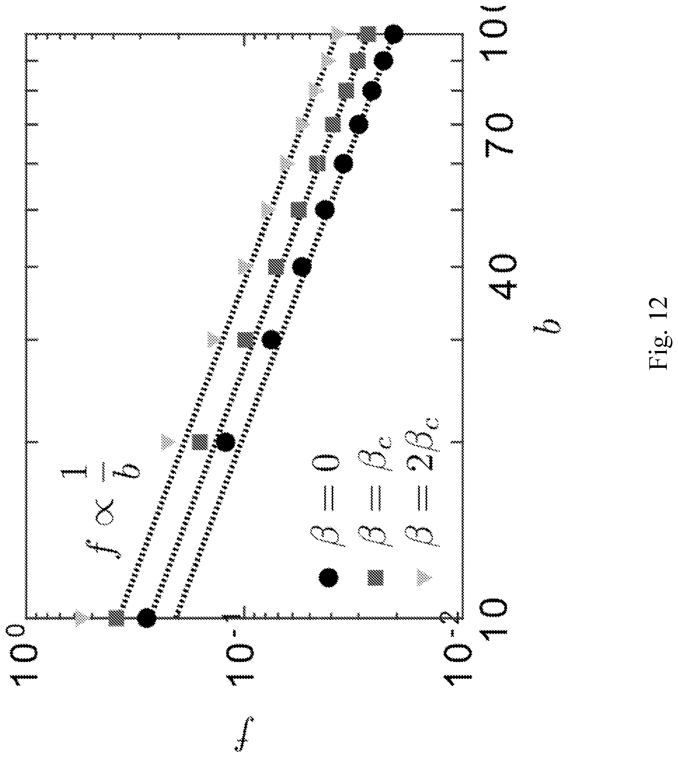

A numerical evaluation of this quantity $f$ as a function of $b$ is shown in **FIG. 12** for three different values of $\beta$. The lines indicate the inverse power law $1/b$. In the limit of large $b$, one finds that $f$ decays inversely proportional to $b$. This is indeed expected as the energy denominator in Eq. (59) is an extensive quantity.

*Adiabatic Paths*

Before a description of the different adiabatic paths, note that the state encoding the Gibbs distribution with $\beta = 0$ can be efficiently prepared. For instance, one can start with $V_{e,i} = 1$ and $V_{g,i} = \Omega_i = 0$. Next, all $\Omega_i$ are simultaneously ramped up to 1 at the same constant rate before doing the same for $V_{g,i}$. The Hamiltonian remains gapped along this path such that the adiabatic state preparation proceeds efficiently. Hence, one can use the state encoding the Gibbs distribution with $\beta = 0$ as the initial point for all adiabatic paths.

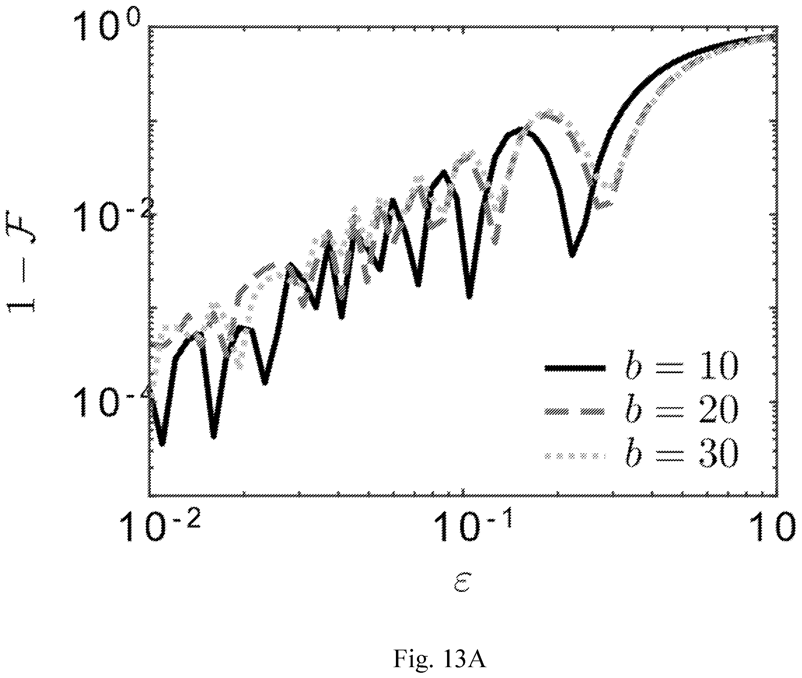

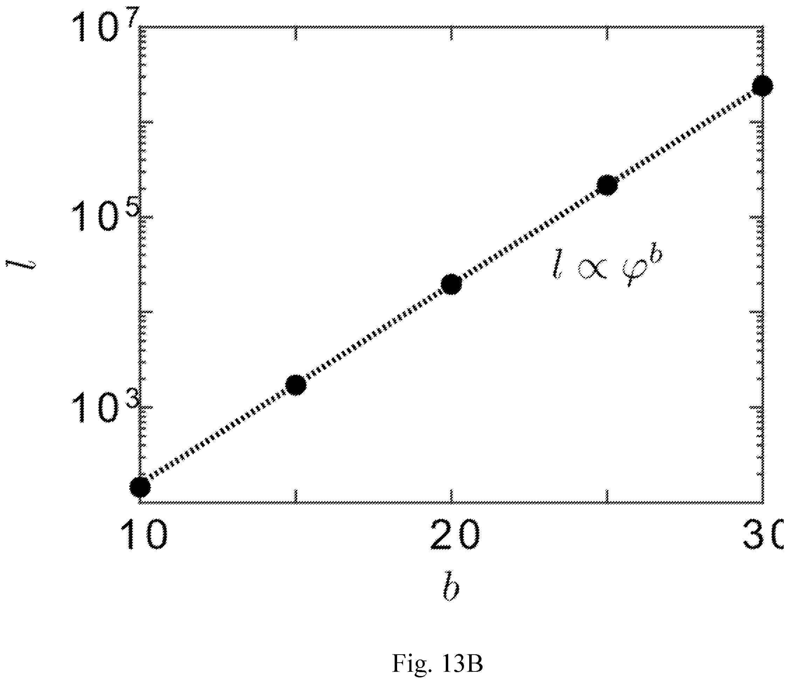

Next, consider adiabatic evolution along the path defined by the set of Hamiltonians $H_q(\beta)$. **FIG. 13A** shows the infidelity $1 - \mathcal{F}$ as a function of the parameter $\varepsilon$ along the path defined by the set of Hamiltonians $H_q(\beta)$ from $\beta = 0$ to $\beta = 2\beta_c$. The numerical integration of the Schrödinger equation performed to obtain **FIG. 13A** follows the same steps as for the independent set problem on the chain graph with time steps chosen to satisfy $\Delta t|\mathrm{d}|0\rangle/\mathrm{d}t| = 10^{-4}$. The adiabatic path length $l$ is a reliable proxy for the dependence of the adiabatic state preparation time on the number of branches $b$ since $1 - \mathcal{F}$ is largely independent of $b$ at fixed $\varepsilon$. The gap at the phase transition point is equal to the tunneling rate $J = \varphi^{-b}$, ignoring the subleading factor $(1 - f)$. Hence, one expects the adiabatic state preparation time and the adiabatic path length to be proportional to $\varphi^b$, which was numerically confirmed in **FIG. 13B.** The numerically exact result for the adiabatic path length (dots) agrees well with the expected dependence on $\varphi^b$ (line). Note that the mixing time of the Markov chain at the phase transition has the same scaling $t_m \gtrsim \varphi^b$. For sampling below the phase transition, the mixing time increases such that the quantum algorithm appears to achieve a speedup. However, the slowdown of the Markov chain can be circumvented by performing simulated annealing across the phase transition. One expects that its convergence time matches the time to adiabatically prepare a state along the path given by the set of Hamiltonians $H_q(\beta)$ for any final value of $\beta$ because the occupation of the central vertex only changes significantly in the proximity of the phase transition.

Following the discussion above, one expects an improvement of the adiabatic state preparation time by increasing the value of $\Omega_{cen}$. As a first guess, one may consider a path where $\Omega_{cen}$ is held constant at 1, while all other parameters are varied according to $H_q(\beta)$ from $\beta = 0$ to the desired final value of $\beta$ (assumed to be below the phase transition). The time required to cross the phase transition is again $t_a \sim 1/J$, where J is evaluated at the phase transition. The term $f\Omega_{cen}^2$ in the effective Hamiltonian [Eq. (28) above] shifts the phase transition close to $\beta = 0$ such that $t_a \sim (3/2)^{b/2}$. However, this does not yet result in a speedup for preparing the desired quantum state encoding the Gibbs distribution as one still has to decrease $\Omega_{cen}$ to its final value $e^{-b\beta/2}$. It turns out that this step negates the speedup if performed adiabatically. The reason for this is that the large value of $\Omega_{cen}$ admixes states where the central vertex is unoccupied, skewing the occupation probability away from its thermal expectation values. Even though this admixture is small, the time to adiabatically remove it exceeds the time to initially cross the phase transition. To avoid this issue, one can in principle suddenly switch $\Omega_{cen}$ to its final value at the cost that the final fidelity is limited by the admixture. Perturbation theory and numerical results suggest that this results in an infidelity $1 - \mathcal{F}$ that decays as $1/b^2$ for large values of $b$.

A slight modification of the path achieves a final state infidelity that is not only polynomially but exponentially small in $b$: first, $V_{e,cen}$ is lowered from its initial value 1 to -1, which can be done in time $t_a \sim (3/2)^{b/2}$ as before. Next, all other parameters are varied according to the set of Hamiltonians $H_q(\beta)$, for which only a time polynomial in $b$ is required.

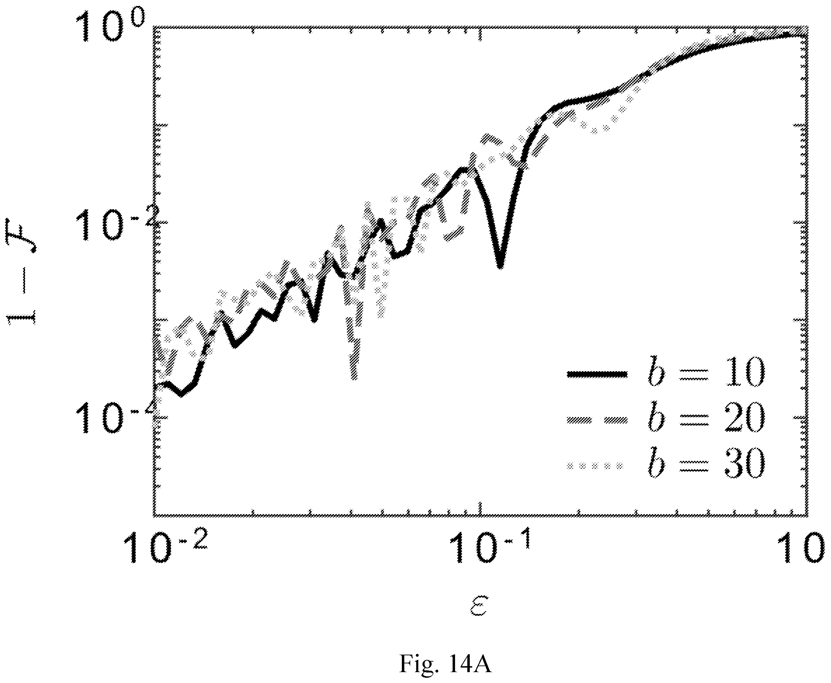

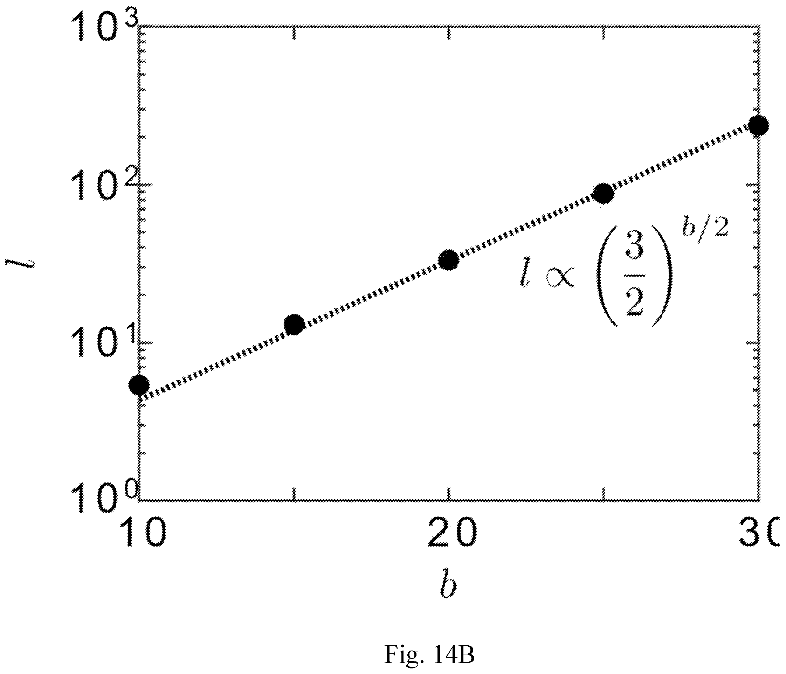

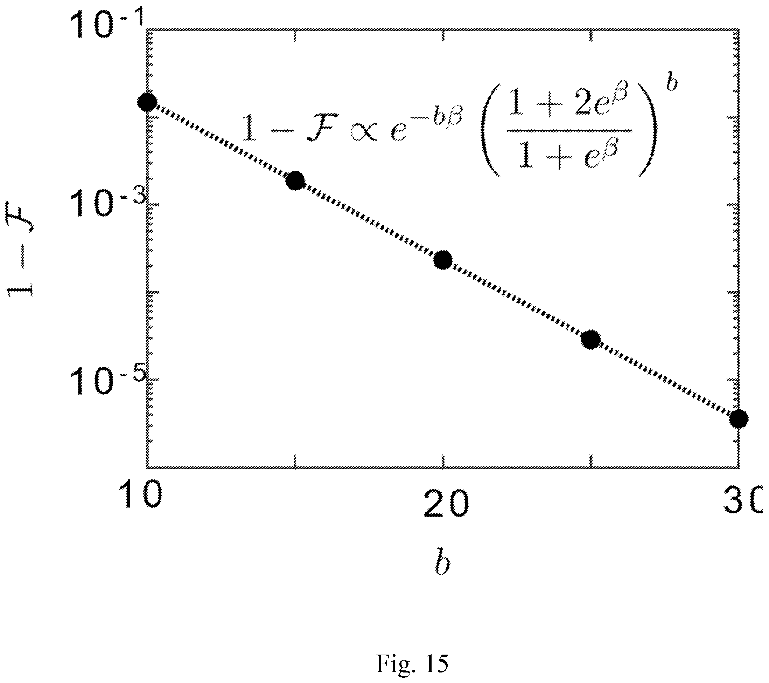

Numerical results for these two steps are shown in **FIGS. 14A** and **14B**. **FIG. 14A** shows the infidelity $1 - \mathcal{F}$ along a path starting at $H_q(0)$ before $V_{e,cen}$ is decreased from 1 to -1. All other parameters are subsequently varied following the set of Hamiltonians $H_q(\beta)$ from $\beta = 0$ to $\beta = 2\beta_c$. The numerical integration of the Schrödinger equation follows the same steps as for the independent set problem on the chain graph with time steps chosen to satisfy $\Delta t |d|0\rangle/dt| = 10^{-3}$. **FIG. 14A** shows that the adiabatic path length again serves as an estimate of the adiabatic state preparation time. **FIG. 14B** shows the adiabatic path length as a function of $b$. The dots show the numerically exact results, with the line indicating the exponential function $(3/2)^{b/2}$. Finally, $V_{e,cen}$ is ramped to its final value $e^{-b\beta}$. Similar to the previous scheme, perfectly adiabatic evolution of this last step would require a very long time because the probability that the central vertex is unoccupied is initially too small owing to the large, negative value of $V_{e,cen}$. However, since its final value $p_0 \approx e^{-b\beta}[1+2e^{\beta}]/(1+e^{\beta})]^b$ is exponentially small in $b$, the fidelity can be exponentially close to unity when suddenly switching $V_{e,cen}$ to its final value. These considerations were numerically confirmed in FIG. 15. After the sweep described above in relation to **FIGS. 14A** and **14B,** $V_{e,cen}$ is switched suddenly to its final value at $\beta = 2\beta_c$. The dots show the resulting infidelity, assuming perfect fidelity along the adiabatic path. The infidelity agrees well with the probability that the central vertex is unoccupied. (line whose functional form is shown in the plot).

While the speedup of this path over the Markov chain appears to be more than quadratic [$t_a \sim (3/2)^{b/2}$ compared to $t_m \gtrsim \varphi^b$], it is likely that a convergence time on the order of $(3/2)^b$ can be achieved using simulated annealing. For instance, one could consider an annealing schedule in which the weight on the central vertex is first increased. This shifts the phase transition towards $\beta = 0$, allowing one to sample at the phase transition in a time that scales as $(3/2)^b$. In the annealing schedule, the temperature can then be lowered to the desired value before ramping the weight of the central vertex back to its initial value. This annealing schedule is in many ways similar to the adiabatic path discussed above. It is nevertheless quadratically slower because unlike in the quantum case it is not possible to vary $V_{e,cen}$ and $\Omega_{cen}$ independently.

In some embodiments, the approach to quantum sampling algorithms described herein unveils a connection between computational complexity and phase transitions, and provides physical insight into the origin of quantum speedup. The quantum Hamiltonians appearing in the construction are guaranteed to be local given that the Gibbs distribution belongs to a local, classical Hamiltonian and that the Markov chain updates are local. Consequently, time evolution under these quantum Hamiltonians can be implemented using Hamiltonian simulation. Moreover, a hardware efficient implementation in near-term devices may be possible for certain cases such as the independent set problem. While the proposed realization utilizing Rydberg blockade is restricted to unit disk graphs, a wider class of graphs may be accessible using, for example, anisotropic interactions and individual addressing with multiple atomic sublevels.

In various embodiments discussed above, a quantum computer comprises a plurality of confined neutral atoms. However, various physical embodiments of a quantum computer are suitable for use according to the present disclosure. While qubits are characterized herein as mathematical objects, each corresponds to a physical qubit that can be implemented using a number of different physical implementations, such as trapped ions, optical cavities, individual elementary particles, molecules, or aggregations of molecules that exhibit qubit behavior. Accordingly, in some embodiments, a quantum computer comprises nonlinear optical media. In some embodiments, a quantum computer comprises a cavity quantum electrodynamics device. In some embodiments, a quantum computer comprises an ion trap. In some embodiments, a quantum computer comprises a nuclear magnetic resonance device. In some embodiments, a quantum computer comprises a superconducting device. In some embodiments, a quantum computer comprises a solid state device.

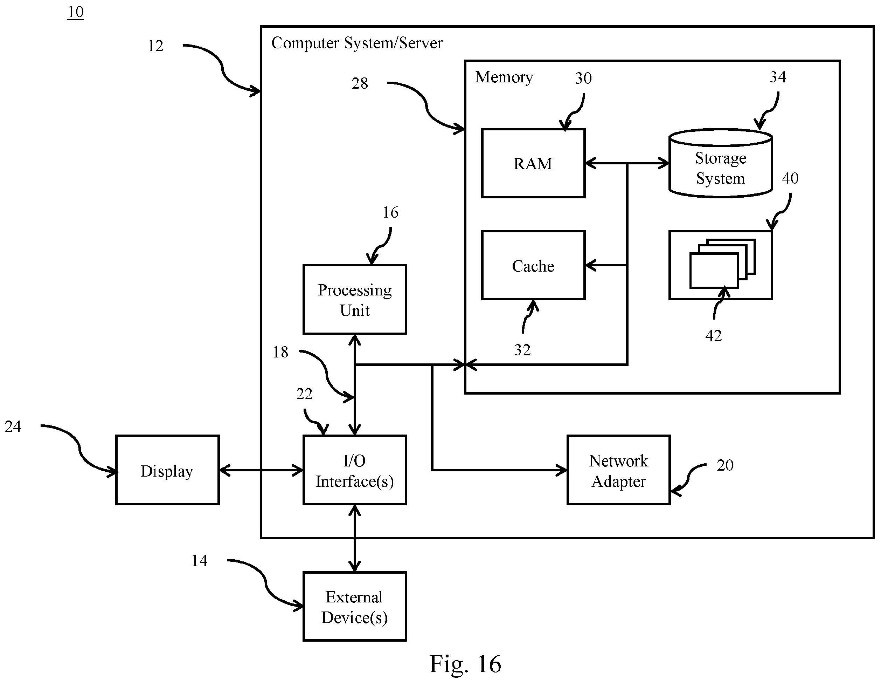

Referring now to **Fig. 16,** a schematic of an example of a computing node is shown. Computing node **10** is only one example of a suitable computing node and is not intended to suggest any limitation as to the scope of use or functionality of embodiments described herein. Regardless, computing node **10** is capable of being implemented and/or performing any of the functionality set forth hereinabove.

In computing node **10** there is a computer system/server **12,** which is operational with numerous other general purpose or special purpose computing system environments or configurations. Examples of well-known computing systems, environments, and/or configurations that may be suitable for use with computer system/server **12** include, but are not limited to, personal computer systems, server computer systems, thin clients, thick clients, handheld or laptop devices, multiprocessor systems, microprocessor-based systems, set top boxes, programmable consumer electronics, network PCs, minicomputer systems, mainframe computer systems, and distributed cloud computing environments that include any of the above systems or devices, and the like.

Computer system/server **12** may be described in the general context of computer system-executable instructions, such as program modules, being executed by a computer system. Generally, program modules may include routines, programs, objects, components, logic, data structures, and so on that perform particular tasks or implement particular abstract data types. Computer system/server **12** may be practiced in distributed cloud computing environments where tasks are performed by remote processing devices that are linked through a communications network. In a distributed cloud computing environment, program modules may be located in both local and remote computer system storage media including memory storage devices.

As shown in Fig. 16, computer system/server 12 in computing node 10 is shown in the form of a general-purpose computing device. The components of computer system/server 12 may include, but are not limited to, one or more processors or processing units 16, a system memory 28, and a bus 18 that couples various system components including system memory 28 to processor 16.

Bus **18** represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, Peripheral Component Interconnect (PCI) bus, Peripheral Component Interconnect Express (PCIe), and Advanced Microcontroller Bus Architecture (AMBA).

Computer system/server **12** typically includes a variety of computer system readable media. Such media may be any available media that is accessible by computer system/server **12,** and it includes both volatile and non-volatile media, removable and non-removable media.

System memory **28** can include computer system readable media in the form of volatile memory, such as random access memory (RAM) **30** and/or cache memory **32.** Computer system/server **12** may further include other removable/non-removable, volatile/non-volatile computer system storage media. By way of example only, storage system **34** can be provided for reading from and writing to a non-removable, non-volatile magnetic media (not shown and typically called a "hard drive"). Although not shown, a magnetic disk drive for reading from and writing to a removable, non-volatile magnetic disk (*e.g.,* a "floppy disk"), and an optical disk drive for reading from or writing to a removable, non-volatile optical disk such as a CD-ROM, DVD-ROM or other optical media can be provided. In such instances, each can be connected to bus **18** by one or more data media interfaces. As will be further depicted and described below, memory **28** may include at least one program product having a set (*e.g.,* at least one) of program modules that are configured to carry out the functions of embodiments of the disclosure.

Program/utility **40,** having a set (at least one) of program modules **42,** may be stored in memory **28** by way of example, and not limitation, as well as an operating system, one or more application programs, other program modules, and program data. Each of the operating system, one or more application programs, other program modules, and program data or some combination thereof, may include an implementation of a networking environment. Program modules **42** generally carry out the functions and/or methodologies of embodiments as described herein.

Computer system/server **12** may also communicate with one or more external devices **14** such as a keyboard, a pointing device, a display **24,** etc.; one or more devices that enable a user to interact with computer system/server **12;** and/or any devices (*e.g.*, network card, modem, etc.) that enable computer system/server **12** to communicate with one or more other computing devices. Such communication can occur via Input/Output (I/O) interfaces **22.** Still yet, computer system/server **12** can communicate with one or more networks such as a local area network (LAN), a general wide area network (WAN), and/or a public network (*e.g.*, the Internet) via network adapter **20.** As depicted, network adapter **20** communicates with the other components of computer system/server **12** via bus **18.** It should be understood that although not shown, other hardware and/or software components could be used in conjunction with computer system/server **12.** Examples, include, but are not limited to: microcode, device drivers, redundant processing units, external disk drive arrays, RAID systems, tape drives, and data archival storage systems, etc.

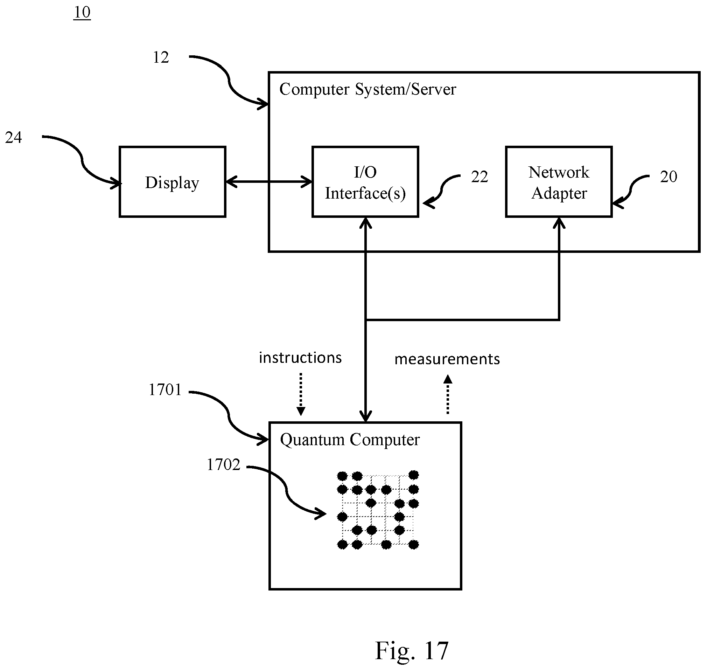

Referring to **Fig. 17,** a schematic view is provided of a combined classical and quantum system according to embodiments of the present disclosure. In this example, quantum computer **1701** is connected to computing node **10,** for example via I/O interface **22** or network adapter **20**. It will be appreciated that additional means of connectivity between a quantum computer and a classical computing node are known in the art. In this example, quantum computer **1701** comprises a plurality of confined neutral atoms **1702**. However, as set out further herein, quantum computer **1701** may utilize alternative quantum systems.

In various embodiments, computing node **10** receives a description of a probability distribution, *e.g.*, from a remote node via network adapter **20** or from internal or external storage such as storage system **34**. Computing node **10** determines a first Hamiltonian having a ground state encoding the probability distribution and determines a second Hamiltonian, the second Hamiltonian being continuously transformable into the first Hamiltonian via a path through at least one quantum phase transition. Computing node **10** provides instructions to quantum computer **1701,** for example via I/O interface **22** or network adapter **20**. The instructions indicate to initialize a quantum system according to a ground state of the second Hamiltonian, and evolve the quantum system from the ground state of the second Hamiltonian to the ground state of the first Hamiltonian according to the path through the at least one quantum phase transition. As set out above, the instructions may indicate the parameters of a time-varying beam of coherent electromagnetic radiation to be directed to each of a plurality of confined neutral atoms **1702**. However, it will be appreciated that alternative physical implementations of quantum computer **1702** will have platform-specific instructions for preparing and evolving a quantum system. Computing node **10** receives from the quantum computer a measurement on the quantum system, thereby obtaining a sample from the probability distribution.

The present disclosure may be embodied as a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (*e.g.,* light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

**Claims**

1. A method of configuring a quantum computer to sample from a probability distribution, the method comprising:

   receiving a description of a probability distribution at a computing node;
   determining, by the computing node, a first Hamiltonian having a ground state encoding the probability distribution;
   determining, by the computing node, a second Hamiltonian, the second Hamiltonian being continuously transformable into the first Hamiltonian via a path through at least one quantum phase transition;
   providing, by the computing node, instructions to a quantum computer to:

   initialize a quantum system according to a ground state of the second Hamiltonian, and
   evolve the quantum system from the ground state of the second Hamiltonian to the ground state of the first Hamiltonian according to the path through the at least one quantum phase transition; and

   receiving, by the computing node, from the quantum computer a measurement on the quantum system, thereby obtaining a sample from the probability distribution.

2. A system comprising:

   a quantum computer; and
   a computing node configured to:

   receive a description of a probability distribution;
   determine a first Hamiltonian having a ground state encoding the probability distribution;
   determine a second Hamiltonian, the second Hamiltonian being continuously transformable into the first Hamiltonian via a path through at least one quantum phase transition;
   provide instructions to the quantum computer to:

   initialize a quantum system according to a ground state of the second Hamiltonian, and
   evolve the quantum system from the ground state of the second Hamiltonian to the ground state of the first Hamiltonian according to the path through the at least one quantum phase transition; and

   receive from the quantum computer a measurement on the quantum system, thereby obtaining a sample from the probability distribution.

3. The method of claim 1 or the system of claim 2, wherein determining the first Hamiltonian comprises deriving the first Hamiltonian from a projected entangled pair state (PEPS) representation of its ground state.

4. The method of claim 1 or the system of claim 2, wherein the description of the probability distribution comprises a description of a Markov chain whose stationary distribution is the probability distribution.

5. The method or system of claim 4, wherein the Markov chain satisfies detailed balance, wherein determining the first Hamiltonian optionally comprises constructing the first Hamiltonian from the Markov chain.

6. The method or system of claim 4, wherein the description of the Markov chain comprises a generator matrix.

7. The method or system of claim 4, wherein the Markov chain comprises a single-site update.

8. The method of claim 1 or the system of claim 2, wherein the ground state of the second Hamiltonian is a product state.

9. The method of claim 1 or the system of claim 2, wherein the evolving is adiabatic.

10. The method of claim 1 or the system of claim 2, wherein the quantum system comprises a plurality of confined neutral atoms.

11. The method or system of claim 10, wherein each of the plurality of confined neutral atoms is configured to blockade at least one other of the plurality of confined neutral atoms when excited into a Rydberg state.

12. The method or system of claim 10, wherein initializing the quantum system comprises exciting each of a subset of the plurality of confined neutral atoms according to the ground state of the second Hamiltonian.

13. The method or system of claim 10, wherein evolving comprises directing a time-varying beam of coherent electromagnetic radiation to each of the plurality of confined neutral atoms.

14. The method or system of claim 10, wherein the plurality of confined neutral atoms is confined by optical tweezers.

15. The method of claim 1 or the system of claim 2, wherein the probability distribution comprises a classical Gibbs distribution.

16. The method or system of claim 15, wherein the path is distinct from a path along a set of first Hamiltonians associated with the Gibbs distribution at different temperatures.

17. The method or system of claim 16, wherein the Gibbs distribution is a Gibbs distribution of weighted independent sets of a graph, wherein the graph is optionally a unit disk graph; a chain graph; or a star graph with two vertices per branch.

18. The method or system of claim 16, wherein the Gibbs distribution is a Gibbs distribution of an Ising model, wherein the Gibbs distribution is optionally a zero-temperature Gibbs distribution and the Ising model is a ferromagnetic 1D Ising model.

19. The method or system of claim 16, wherein the Gibbs distribution is a Gibbs distribution of a classical Hamiltonian encoding an unstructured search problem, wherein the Gibbs distribution is optionally a zero-temperature Gibbs distribution and the unstructured search problem has a single solution.

20. The method or system of claim 10, wherein performing the measurement comprises imaging the plurality of confined neutral atoms, wherein imaging the plurality of confined neutral atoms optionally comprises quantum gas microscopy.

**Patentansprüche**

1. Verfahren zum Konfigurieren eines Quantencomputers, um aus einer Wahrscheinlichkeitsverteilung abzutasten, wobei das Verfahren umfasst:

Empfangen einer Beschreibung einer Wahrscheinlichkeitsverteilung an einem Rechenknoten;
Bestimmen, durch den Rechenknoten, eines ersten Hamilton-Operators mit einem Grundzustand, der die Wahrscheinlichkeitsverteilung codiert;
Bestimmen, durch den Rechenknoten, eines zweiten Hamilton-Operators, wobei der zweite Hamilton-Operator kontinuierlich über einen Pfad durch mindestens einen Quantenphasenübergang in den ersten Hamilton-Operator transformierbar ist;
Bereitstellen, durch den Rechenknoten, von Anweisungen an einen Quantencomputer, um:

ein Quantensystem gemäß einem Grundzustand des zweiten Hamilton-Operators zu initialisieren und das Quantensystem vom Grundzustand des zweiten Hamilton-Operators zum Grundzustand des ersten Hamilton-Operators gemäß dem Pfad durch den mindestens einen Quantenphasenübergang zu entwickeln; und

Empfangen, durch den Rechenknoten, vom Quantencomputer einer Messung auf dem Quantensystem, wodurch eine Probe aus der Wahrscheinlichkeitsverteilung erhalten wird.

2. System, das umfasst:

einen Quantencomputer und
einen Rechenknoten, der dazu konfiguriert ist:

eine Beschreibung einer Wahrscheinlichkeitsverteilung zu empfangen;
einen ersten Hamilton-Operator mit einem Grundzustand zu bestimmen, der die Wahrscheinlichkeitsverteilung codiert;
einen zweiten Hamilton-Operator zu bestimmen, wobei der zweite Hamilton-Operator kontinuierlich über einen Pfad durch mindestens einen Quantenphasenübergang in den ersten Hamilton-Operator transformierbar ist;
dem Quantencomputer Anweisungen bereitzustellen, um:

ein Quantensystem gemäß einem Grundzustand des zweiten Hamilton-Operators zu initialisieren und das Quantensystem vom Grundzustand des zweiten Hamilton-Operators zum Grundzustand des ersten Hamilton-Operators gemäß dem Pfad durch den mindestens einen Quantenphasenübergang zu entwickeln; und
eine Messung auf dem Quantensystem vom Quantencomputer zu empfangen, wodurch eine Probe aus der Wahrscheinlichkeitsverteilung erhalten wird.

3. Verfahren nach Anspruch 1 oder System nach Anspruch 2, wobei das Bestimmen des ersten Hamilton-Operators ein Ableiten des ersten Hamilton-Operators aus einer Darstellung eines projizierten verschränkten Paarzustands (PEPS) seines Grundzustands umfasst.

4. Verfahren nach Anspruch 1 oder System nach Anspruch 2, wobei die Beschreibung der Wahrscheinlichkeitsverteilung eine Beschreibung einer Markov-Kette, deren stationäre Verteilung die Wahrscheinlichkeitsverteilung ist, umfasst.

5. Verfahren oder System nach Anspruch 4, wobei die Markov-Kette ein detailliertes Gleichgewicht erfüllt, wobei das Bestimmen des ersten Hamilton-Operators optional ein Konstruieren des ersten Hamilton-Operators aus der Markov-Kette umfasst.

6. Verfahren oder System nach Anspruch 4, wobei die Beschreibung der Markov-Kette eine Generatormatrix umfasst.

7. Verfahren oder System nach Anspruch 4, wobei die Markov-Kette eine Einzelstandortaktualisierung umfasst.

8. Verfahren nach Anspruch 1 oder System nach Anspruch 2, wobei der Grundzustand des zweiten Hamilton-Operators ein Produktzustand ist.

9. Verfahren nach Anspruch 1 oder System nach Anspruch 2, wobei das Entwickeln adiabatisch ist.

10. Verfahren nach Anspruch 1 oder System nach Anspruch 2, wobei das Quantensystem mehrere begrenzte neutrale Atome umfasst.

11. Verfahren oder System nach Anspruch 10, wobei jedes der mehreren begrenzten neutralen Atome dazu konfiguriert ist, mindestens ein anderes der mehreren begrenzten neutralen Atome zu blockieren, wenn es in einen Rydberg-Zustand angeregt wird.

12. Verfahren oder System nach Anspruch 10, wobei das Initialisieren des Quantensystems ein Anregen jedes einer Teilmenge der mehreren begrenzten neutralen Atome gemäß dem Grundzustand des zweiten Hamilton-Operators umfasst.

**13.** Verfahren oder System nach Anspruch 10, wobei das Entwickeln ein Richten eines zeitlich variierenden Strahls kohärenter elektromagnetischer Strahlung auf jedes der mehreren begrenzten neutralen Atome umfasst.

**14.** Verfahren oder System nach Anspruch 10, wobei die mehreren begrenzten neutralen Atome durch eine optische Pinzette begrenzt sind.

**15.** Verfahren nach Anspruch 1 oder System nach Anspruch 2, wobei die Wahrscheinlichkeitsverteilung eine klassische Gibbs-Verteilung umfasst.

**16.** Verfahren oder System nach Anspruch 15, wobei sich der Pfad von einem Pfad entlang eines Satzes von ersten Hamilton-Operatoren, die mit der Gibbs-Verteilung bei unterschiedlichen Temperaturen assoziiert sind, unterscheidet.

**17.** Verfahren oder System nach Anspruch 16, wobei die Gibbs-Verteilung eine Gibbs-Verteilung gewichteter unabhängiger Sätze eines Graphen ist, wobei der Graph optional ein Einheitskreisgraph, ein Kettengraph oder ein Sterngraph mit zwei Scheitelpunkten pro Zweig ist.

**18.** Verfahren oder System nach Anspruch 16, wobei die Gibbs-Verteilung eine Gibbs-Verteilung eines Ising-Modells ist, wobei die Gibbs-Verteilung optional eine Nulltemperatur-Gibbs-Verteilung ist und das Ising-Modell ein ferromagnetisches 1D-Ising-Modell ist.

**19.** Verfahren oder System nach Anspruch 16, wobei die Gibbs-Verteilung eine Gibbs-Verteilung eines klassischen Hamilton-Operators, der ein unstrukturiertes Suchproblem codiert, ist, wobei die Gibbs-Verteilung optional eine Nulltemperatur-Gibbs-Verteilung ist und das unstrukturierte Suchproblem eine einzige Lösung aufweist.

**20.** Verfahren oder System nach Anspruch 10, wobei das Durchführen der Messung ein Abbilden der mehreren begrenzten neutralen Atome umfasst, wobei das Abbilden der mehreren begrenzten neutralen Atome optional die Quantengasmikroskopie umfasst.

**Revendications**

**1.** Procédé de configuration d'un ordinateur quantique pour échantillonner une distribution de probabilité, le procédé comprenant :

la réception d'une description d'une distribution de probabilité au niveau d'un nœud de calcul ;
la détermination, par le nœud de calcul, d'un premier Hamiltonien ayant un état fondamental codant la distribution de probabilité ;
la détermination, par le nœud de calcul d'un deuxième Hamiltonien, le deuxième Hamiltonien étant transformable en continu en le premier Hamiltonien via un trajet passant par au moins une transition de phase quantique ;
la fourniture, par le nœud de calcul, d'instructions à un calculateur quantique pour :

initialiser un système quantique selon un état fondamental du deuxième Hamiltonien, et
faire évoluer le système quantique de l'état fondamental du deuxième Hamiltonien vers l'état fondamental du premier Hamiltonien selon le trajet passant par ladite au moins une transition de phase quantique ; et
la réception, par le nœud de calcul, en provenance de l'ordinateur quantique, d'une mesure sur le système quantique, pour ainsi obtenir un échantillon de la distribution de probabilité.

**2.** Système comprenant :

un ordinateur quantique ; et
un nœud de calcul configuré pour :

recevoir une description d'une distribution de probabilité ;
déterminer un premier Hamiltonien ayant un état fondamental codant la distribution de probabilité ;
déterminer un deuxième Hamiltonien, le deuxième Hamiltonien étant transformable en continu en le premier Hamiltonien via un trajet passant par au moins une transition de phase quantique ;
fournir des instructions à l'ordinateur quantique pour :

initialiser un système quantique selon un état fondamental du deuxième Hamiltonien, et

faire évoluer le système quantique de l'état fondamental du deuxième Hamiltonien vers l'état fondamental du premier Hamiltonien selon le trajet passant par ladite au moins une transition de phase quantique ; et

recevoir en provenance de l'ordinateur quantique une mesure sur le système quantique, pour ainsi obtenir un échantillon de la distribution de probabilité.

3. Procédé selon la revendication 1 ou système selon la revendication 2, dans lequel la détermination du premier Hamiltonien comprend le fait de déduire le premier Hamiltonien d'une représentation d'état projeté de paire intriquée (PEPS) de son état fondamental.

4. Procédé selon la revendication 1 ou système selon la revendication 2, dans lequel la description de la distribution de probabilité comprend une description d'une chaîne de Markov dont la distribution stationnaire est la distribution de probabilité.

5. Procédé ou système selon la revendication 4, dans lequel la chaîne de Markov satisfait à un équilibre détaillé, dans lequel la détermination du premier Hamiltonien comprend facultativement la construction du premier Hamiltonien à partir de la chaîne de Markov.

6. Procédé ou système selon la revendication 4, dans lequel la description de la chaîne de Markov comprend une matrice génératrice.

7. Procédé ou système selon la revendication 4, dans lequel la chaîne de Markov comprend une mise à jour sur site unique.

8. Procédé selon la revendication 1 ou système selon la revendication 2, dans lequel l'état fondamental du deuxième Hamiltonien est un état produit.

9. Procédé selon la revendication 1 ou système selon la revendication 2, dans lequel l'évolution est adiabatique.

10. Procédé selon la revendication 1 ou système selon la revendication 2, dans lequel le système quantique comprend une pluralité d'atomes neutres confinés.

11. Procédé ou système selon la revendication 10, dans lequel chacun de la pluralité d'atomes neutres confinés est configuré pour bloquer au moins un autre de la pluralité d'atomes neutres confinés lorsqu'il est excité dans un état de Rydberg.

12. Procédé ou système selon la revendication 10, dans lequel l'initialisation du système quantique comprend l'excitation de chacun d'un sous-ensemble de la pluralité d'atomes neutres confinés conformément à l'état fondamental du deuxième Hamiltonien.

13. Procédé ou système selon la revendication 10, dans lequel l'évolution comprend le fait de diriger un faisceau variant dans le temps de rayonnement électromagnétique cohérent vers chacun de la pluralité d'atomes neutres confinés.

14. Procédé ou système selon la revendication 10, dans lequel la pluralité d'atomes neutres confinés est confinée par des pinces optiques.

15. Procédé selon la revendication 1 ou système selon la revendication 2, dans lequel la distribution de probabilité comprend une distribution de Gibbs classique.

16. Procédé ou système selon la revendication 15, dans lequel le trajet est distinct d'un trajet le long d'un ensemble de premiers Hamiltoniens associés à la distribution de Gibbs à des températures différentes.

17. Procédé ou système selon la revendication 16, dans lequel la distribution de Gibbs est une distribution de Gibbs d'ensembles indépendants pondérés d'un graphe, dans lequel le graphe est facultativement un graphe à disques unités ; un graphe en chaîne ; ou un graphe en étoile avec deux sommets par branche.

18. Procédé ou système selon la revendication 16, dans lequel la distribution de Gibbs est une distribution de Gibbs d'un modèle Ising, dans lequel la distribution de Gibbs est facultativement une distribution de Gibbs à température nulle et le modèle d'Ising est un modèle d'Ising 1D ferromagnétique.

19. Procédé ou système selon la revendication 16, dans lequel la distribution de Gibbs est une distribution de Gibbs d'un Hamiltonien classique codant un problème de recherche non structuré, dans lequel la distribution de Gibbs est facultativement une distribution de Gibbs à température nulle et le problème de recherche non structuré a une solution unique.

20. Procédé ou système selon la revendication 10, dans lequel la réalisation de la mesure comprend l'imagerie de la pluralité d'atomes neutres confinés, dans lequel l'imagerie de la pluralité d'atomes neutres confinés comprend facultativement la microscopie à gaz quantique.

```
                    ┌─────────────────────────────┐
              110 ↘ │ Receive a description of a   │
                    │   probability distribution   │
        100         │            p(s)              │
                    └─────────────────────────────┘
                                   │
                                   ▼
                    ┌─────────────────────────────┐
              120 ↘ │ Determine a first Hamiltonian H_q │
                    │ with ground state |ψ⟩ encoding p(s) │
                    └─────────────────────────────┘
                                   │
                                   ▼
                    ┌─────────────────────────────┐
              130 ↘ │  Initialize a quantum system in │ ◄──────┐
                    │   ground state |φ⟩ of a second │        │
                    │       Hamiltonian H_0          │        │
                    └─────────────────────────────┘           │
                                   │                           │
                                   ▼                           │
        ┌───────────────────────────────────────────────────┐ │
  140 ↘ │ Evolve the quantum system under a time-dependent  │ │
        │ Hamiltonian that continuously transforms H_0 into H_q through at │
        │ least one quantum phase transition, thereby preparing |ψ⟩ │
        └───────────────────────────────────────────────────┘ │
                                   │                           │
                                   ▼                           │
                    ┌─────────────────────────────┐           │
              150 ↘ │   Measure the quantum        │───────────┘
                    │  system to obtain a sample   │
                    │        from p(s)             │
                    └─────────────────────────────┘
```

Fig. 1A

time

Markov chain
(diffusive)

Fig. 1B

quantum
(ballistic)

time

Fig. 1C

Fig. 2A

Fig. 2B

Fig. 2C

Fig. 2D

EP 4 088 230 B1

Fig. 3A

Fig. 3B

Fig. 3C

Fig. 3D

$$p_{0\rightarrow1} = \left(\frac{1+e^{\beta}}{1+2e^{\beta}}\right)^{b}$$

$|\psi_1\rangle$

$|\psi_0\rangle$

$J = \Omega_{\mathrm{cen}}\sqrt{p_{0\rightarrow1}}$

Fig. 4A

Fig. 4B

Fig. 5A

Fig. 5B

Fig. 6

Fig. 7A

Fig. 7B

Fig. 7C

Fig. 7D

Fig. 8

$$\alpha = -\frac{\pi}{2} + \tan^{-1}(2)$$

940

910

920

930

$G$

$\eta$

$n = 10$
$n = 100$
$n = 1000$

Fig. 9B

Fig. 10A

EP 4 088 230 B1

Fig. 10B

EP 4 088 230 B1

Fig. 11A

EP 4 088 230 B1

Fig. 11B

Fig. 12

Fig. 13A

EP 4 088 230 B1

EP 4 088 230 B1

Fig. 13B

60

Fig. 14A

EP 4 088 230 B1

Fig. 14B

$$1 - \mathcal{F} \propto e^{-b\beta} \left( \frac{1 + 2e^{\beta}}{1 + e^{\beta}} \right)^{b}$$

Fig. 15

Fig. 16

Fig. 17

EP 4 088 230 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62957400

**Non-patent literature cited in the description**

- **VERSTRAETE, F.** ; **WOLF, M. M.** ; **PEREZ-GARCIA, D.** ; **CIRAC, J. I.** Criticality, the Area Law, and the Computational Power of Projected Entangled Pair States. *Phys. Rev. Lett.*, 2006, vol. 96, 220601
- **PEREZ-GARCIA, D.** ; **VERSTRAETE, F.** ; **CIRAC, J. I.** ; **WOLF, M. M.** PEPS as unique ground states of local Hamiltonians. *Quant. Inf. Comp.*, 2008, vol. 8, 0650
- **PICHLER, H.** ; **WANG, S.-T.** ; **ZHOU, L.** ; **CHOI, S.** ; **LUKIN, M. D.** *Computational complexity of the Rydberg blockade in two dimensions*, 2018, http://arxiv.org/abs/ 1809.04954